# EUROPEAN PATENT APPLICATION

(11) **EP 1 961 994 A2**
(43) Date of publication of application: **27.08.2008**
(21) Application number: 08001030.9
(22) Date of filing: 21.01.2008
(51) Int. Cl.: F16H 3/00, F16H 37/04, F16H 47/04

(54) **Working-vehicle transmission system**

(30) Priority: 23.01.2007 JP 2007013041; 23.01.2007 JP 2007013042
(71) Applicant: KANZAKI KOKYUKOKI MFG. CO., LTD., Amagasaki-shi, Hyogo (JP)
(72) Inventor: Hasegawa, Toshiyuki, Amagasaki-shi Hyogo (JP); Ebihara, Tomoyuki, Amagasaki-shi Hyogo (JP); Ishii, Norihiro, Amagasaki-shi Hyogo (JP); Koga, Kazunari, Amagasaki-shi Hyogo (JP)
(74) Representative: Jostarndt, Hans-Dieter

(57) **Abstract**

A working vehicle transmission system comprises a PTO device for driving an external working device by power of a prime mover, and a multistage transmission for transmitting power from the prime mover to an axle. The multistage transmission includes a main speed-change mechanism and a sub speed-change mechanism. The main speed-change mechanism has plural drive trains for setting respective different speed stages. The sub speed-change mechanism is disposed downstream of the main speed-change mechanism and has plural drive trains for setting respective different speed stages. The main speed-change mechanism includes a first clutch and a second clutch. The main speed-change mechanism drive trains used for setting odd-numbered speed stages are activated by engaging the first clutch. On the other hand, the main speed-change mechanism drive trains used for setting even-numbered speed stages are activated by engaging the second clutch. During a speed-change operation of the main speed-change mechanism, an engagement action of one of the first and second clutches and a disengagement action of the other of the first and second clutches overlap each other. A reverser is disposed upstream of the first and second clutches of the main speed-change mechanism so as to enable switching the direction of output rotation transmitted to the first and second clutches from one direction to the opposite direction.

## Description

### BACKGROUND OF THE INVENTION

### Field of the Invention

The present invention relates to a working vehicle transmission system for working vehicles such as tractors, including a power take off (hereinafter referred to as a "PTO") device for driving an external working device by a prime mover, and a multistage transmission for transmitting power from the prime mover to an axle.

### Related Art

As disclosed in JP 2003-314679A, there is a well-known working vehicle transmission system used for working vehicles such as tractors, in which a multistage transmission includes two mechanical clutches such that, during a gearshift, the engaging action of one clutch overlaps the disengaging action of the other clutch so as to create a double clutch-engaging state, This permits gear shifting without interrupting the transmission of rotary power from a prime mover, such as an engine or an electric motor, to an axle.

This double clutch action somewhat reduces shocks generated during a gearshift by the working vehicle transmission system. However, a gearshift of such a multistage transmission using mechanical clutches still lacks optimal smoothness and continuity. Especially at high speeds, this system cannot achieve the levels of smooth acceleration and gear shifting experienced in ordinary passenger cars. As a result, when comfort and stability are considered, high speed movement of a working vehicle equipped with this conventional working vehicle transmission system is problematic. Further, in the middle or low speed ranges, a gearshift of the multistage transmission does not precisely correspond to the ever-changing traveling speed of the vehicle, thereby hindering the workability, power transmission efficiency, and fuel efficiency of the vehicle.

### SUMMARY OF THE INVENTION

An object of the invention is to provide a working vehicle transmission system, including a multistage transmission, wherein the multistage transmission speed-changes power from a prime mover at one of various speeds so as to correspond to different conditions (such as different vehicle traveling speeds), while allowing for efficiencies in workability, power transmission and fuel consumption,

To achieve the object, according to the invention, a working vehicle transmission system comprises a PTO device for driving an external working device by a prime mover, and a multistage transmission for transmitting power from the prime mover to an axle. The multistage transmission includes a main speed-change mechanism and a sub speed-change mechanism. The main speed-change mechanism has plural drive trains for setting respective different speed stages. The sub speed-change mechanism is disposed downstream of the main speed-change mechanism and has plural drive trains for setting respective different speed stages. The main speed-change mechanism includes a first clutch and a second clutch. The main speed-change mechanism drive trains used for setting odd-numbered speed stages are activated by engaging the first clutch. On the other hand, the main speed-change mechanism drive trains used for setting even-numbered speed stages are activated by engaging the second clutch. During a speed-change operation of the main speed-change mechanism, an engagement action of one of the first and second clutches and a disengagement action of the other of the first and second clutches overlap each other. A reverser is disposed upstream of the first and second clutches of the main speed-change mechanism so as to enable switching the direction of output rotation transmitted to the first and second clutches from one direction to the opposite direction.

Because of this control of the first and second clutches, during traveling of a working vehicle, the speed-change of the working vehicle according to the speed-change of the main speed change mechanism of the multistage transmission is considerably more smooth, This improves the comfort, operability and stability of the working vehicle during traveling. Because of the presence of the reverser disposed upstream of the first and second clutches of the main speed change mechanism, a separate drive train for backward-traveling in addition to the drive train for forward-traveling does not have to be provided. This reduces the number of drive trains of the main and sub speed change mechanisms, thereby minimizing and economizing the working vehicle transmission system. Further, all of the speed-setting drive trains of the multistage transmission can be adapted for forward-traveling and for backward-traveling. For example, if the total number of speed stages created by the main and sub speed-change mechanisms of the multistage transmission is eight, the working vehicle transmission system can be speed-changed among sixteen speed stages in total - i.e., eight forward-traveling speed stages and eight backward-traveling speed stages. In this way, while the number of speed stages of the multistage transmission are reduced, many speed stages are available for both forward-traveling and backward-traveling.

As a first aspect of the working vehicle transmission system, preferably, a torque converter is interposed between the prime mover and the reverser.

Therefore, while the traveling speed is speed-changed stepwise by the multistage transmission, the effect of automatic torque change by the torque converter is ensured so as to further smoothen the speed-change of the multistage transmission in cooperation with the overlap action of the first and second clutches.

In the first aspect of the working vehicle transmission system, the torque converter can be locked up. Whether or not the torque converter is locked up depends on the set speed stage of the sub speed-change mechanism.

When a speed stage of the sub speed-change mechanism is set, it is automatically selected whether the torque converter is locked up or not in correspondence to the set speed stage. For example, the torque converter may not be locked up when a low speed stage of the sub speed-change mechanism corresponding to the non-working traveling mode is selected. Therefore, the torque is automatically changed by the torque converter so as to correspond to the non-working traveling speed, thereby allowing for smoother acceleration and speed-change, and ensuring sufficient operability and stability in traveling. On the other hand, when a high speed stage of the sub speed-change mechanism corresponding to the working traveling mode is selected, the multistage speed-change mechanism speed-changes the output rotary speed stepwise to an axle without the torque change by the torque converter. Therefore, the vehicle can work at a constant speed in its low and middle speed range, for example, on a soft field having a large resistance against traveling of the vehicle regardless oflarge variation of the torque. Further, power loss can be reduced so as to ensure a stable working speed and to improve the efficiency in power transmission, thereby ensuring high workability, as compared to when using the fluid function of the torque converter.

In the first aspect of the working vehicle transmission system, preferably, the torque converter can be locked up. When the torque converter is locked up and a working vehicle starts, one of the drive trains of the main speed-change mechanism for setting a low speed stage is set to be activated.

Therefore, the working vehicle can consistently start free from engine stalling even while it does not have the torque changing function of the torque converter. Further, the lowest speed drive train reduces load against the starting vehicle, so that even a small clutch package can serve as a sufficiently durable speed-changing clutch.

In the first aspect of the working vehicle transmission system, preferably, the PTO device is drivingly connected to the prime mover without the torque converter therethrough.

Therefore, regardless of whether the torque converter is locked up or not, the PTO device receives the power from the prime mover without the influence of torque change by the torque converter, so as to be driven at a constant speed. Therefore, no additional power train bypassing the torque converter is required to directly transmit the prime mover power to the PTO device while the torque converter is locked up. Further, a lock-up control mechanism of the torque converter can be minimized because the torque converter does not have to output power to the PTO device, thereby reducing costs, minimizing the transmission system, and simplifying maintenance.

Alternatively, in the first aspect of the working vehicle transmission system, preferably, the PTO device is drivingly connected to the prime mover through the torque converter.

Therefore, the PTO device can be subjected to the torque change effect by the torque converter. When a less intensive activity, such as spraying, is performed that does not require strictly constant speed, a high speed stage is set so as to ensure the smooth speed-change effect by the torque converter, thereby ensuring swift work.

As a second aspect of the working transmission system, preferably, a continuously variable transmission is disposed upstream of the sub speed-change mechanism of the multistage transmission and is drivingly connected to the sub speed-change mechanism in parallel to the main speed-change mechanism of the multistage transmission. Either a multistage speed-change mode or a stepless speed-change mode for driving the axle is selected. The multistage speed-change mode is selected for outputting a rotary power speed-changed stepwise by the main speed-change mechanism to the sub speed-change mechanism. The stepless speed-change mode is selected for outputting a rotary power speed-changed without steps by the continuously variable transmission to the sub speed-change mechanism.

Therefore, the axle can be speed-changed without steps only in the vehicle speed range which is desired to be speed-changed without steps. The multistage speed-change by the multistage transmission does not cover the whole of vehicle speed range. Thus, the transmission system performs optimal speed-change corresponding to different purposes of work and traveling, thereby improving operability, stability in traveling, and efficiencies in work, power transmission and fuel consumption.

In the second aspect of the working vehicle transmission system, preferably, the working vehicle transmission system is set in a load control mode for speed-changing a traveling speed of a working vehicle in correspondence to a load on the prime mover regardless of whether the multistage speed-change mode or the stepless speed-change mode is selected.

Therefore, even when the prime mover receives an excessive load through a wheel of the working vehicle or a working device driving system, the vehicle speed can be optimized immediately to correspond to the conditions of the load on the prime mover so as to prevent the prime mover from stopping, and the rotary speed of the prime mover can be basically kept constant while it is temporarily changed to address the excessive load, thereby ensuring high stability in traveling and efficiency in work.

In the second aspect of the working vehicle transmission system, preferably, a traveling speed range of a working vehicle corresponding to the multistage speed-change mode and a traveling speed range of the working vehicle corresponding to the stepless speed-change mode overlap each other so as to have an overlap speed range.

Therefore, when the vehicle speed exists in the overlap speed range, either the stepless speed-change mode or the multistage speed-change mode can be selected for any purposes, so that the working vehicle can travel in the selected optimal speed-change mode corresponding to work contents and conditions of load on the prime mover, thereby further improving efficiencies in work, power transmission and fuel consumption.

In the second aspect of the working vehicle transmission system, preferably, the continuously variable transmission is drivingly connected to a certain drive train of the plural drive trains of the main speed-change mechanism for setting respective speed stages. The stepless speed-change mode is selected by selecting the certain drive train of the main speed-change mechanism to be activated.

Therefore, since the certain drive train is provided for setting a speed stage which is desired to be speed-changed without steps by the continuously variable transmission, so that the working vehicle can be speed-changed without steps when it travels in a speed range desired to be speed-changed without steps.

Further preferably, the certain drive train is a drive train for setting the lowest speed stage of the main speed-change mechanism.

Therefore, the vehicle speed created by setting the lowest speed stage used for starting and stopping a vehicle can be speed-changed without steps, so that the vehicle can smoothly start and surely stop at a target position, and can be improved in workability.

Alternatively, in the second aspect of the working vehicle transmission system, preferably, a stepless speed-change clutch is provided to drivingly connect the continuously variable transmission to an input shaft of the sub speed-change mechanism. A multistage speed-change clutch is provided to drivingly connect the main speed-change mechanism to the input shaft of the sub speed-change mechanism. The stepless speed-change clutch and the multistage speed-change clutch are controlled so that an engagement action of one of the stepless and multistage speed-change clutches and a disengagement action of the other of the stepless and multistage speed-change clutches overlap each other.

Therefore, the stepless and multistage speed-change modes can be smoothly switched therebetween. Especially, regarding the working vehicle transmission system provided with the overlap speed range about vehicle speed, due to the parallel connection of the continuously variable transmission and the multistage transmission and due to the overlap action of the stepless speed-change clutch and the multistage speed-change clutch, the switching between the stepless speed-change mode and the multistage speed-change mode in the overlap speed range is considerably smoother.

These, other and further objects, features and advantages of the invention will appear more fully from the following description with reference to accompanying drawings.

### BRIEF DESCRIPTION OF THE DRAWINGS

Fig. 1 is a skeleton diagram of an entire construction of a working vehicle transmission system according to a first embodiment of the invention.

Fig. 2 is a plan view partly in section of a main speed-change mechanism of the working vehicle transmission system according to the first embodiment.

Fig. 3 is a hydraulic circuit diagram of the working vehicle transmission system according to the first embodiment for speed-change and clutch-operation.

Fig. 4 is a block diagram of the working vehicle transmission system according to the first embodiment for the speed-change and clutch-operation.

Fig. 5(a) is a sectional side view of an engageable portion of a clutch.

Fig. 5(b) is a sectional plan view of the engageable portion of the clutch.

Fig. 6 is a skeleton diagram of an entire construction of a working vehicle transmission system according to a second embodiment of the invention.

Fig. 7 is a plan view partly in section of a main transmission of the working vehicle transmission system according to the second embodiment.

Fig. 8 is a hydraulic circuit diagram of the working vehicle transmission system according to the second embodiment for speed-change and clutch-operation.

Fig. 9 is a block diagram of the working vehicle transmission system according to the second embodiment for the speed-change and clutch-operation.

Fig. 10 is a table of gear trains of the working vehicle transmission system according to the second embodiment to be selected for starting the vehicle.

Fig. 11 is a skeleton diagram of an entire construction of another working vehicle according to the second embodiment.

Fig. 12 is a skeleton diagram of an entire construction of a working vehicle transmission system according to a third embodiment.

Fig. 13 is a skeleton diagram of an entire construction of another working vehicle transmission system according to the third embodiment.

Fig. 14 is a block diagram of a control system of the working vehicle transmission system according to the third embodiment for speed-change and clutch-operation.

Fig. 15 is a skeleton diagram of an entire construction of a working vehicle transmission system according to a fourth embodiment.

Fig. 16 is a skeleton diagram of a traveling speed-change mechanism of another working vehicle transmission system according to the fourth embodiment.

Fig. 17 is a block diagram of a control system of the working vehicle transmission system according to the fourth embodiment for speed-change and clutch-operation.

Fig. 18 is a chart of variation of vehicle traveling speed set in each speed-change mode by the working vehicle transmission system according to the fourth embodiment.

Fig. 19 is a block diagram of a speed-change switch when an overlap speed range is provided for the working vehicle transmission system according to the fourth embodiment.

Fig. 20 is a chart of variation of vehicle traveling speed set in each speed-change mode when the overlap speed range is provided for the working vehicle transmission system according to the fourth embodiment.

Fig. 21 is a skeleton diagram of an entire construction of a working vehicle transmission system according to a fifth embodiment.

Fig. 22(a) is a skeleton diagram of a gear-type multistage transmission of another working vehicle transmission system according to the fifth embodiment, employing gears reduced in number.

Fig. 22(b) is a skeleton diagram of a gear-type multistage transmission for another working vehicle transmission system according to the fifth embodiment, employing a cylindrical speed-change output shaft is used.

### DETAILED DESCRIPTION OF THE INVENTION

Description will be given of first and second embodiments of working vehicle transmission systems each of which uses a torque converter for improving operability and stability during traveling at high speeds. Hereinafter, description of each of the embodiments of the working vehicle transmission systems is based on the assumption that the working vehicle transmission system is extended rearward from a prime mover and is provided with a PTO device (including a PTO shaft) at a rear end thereof.

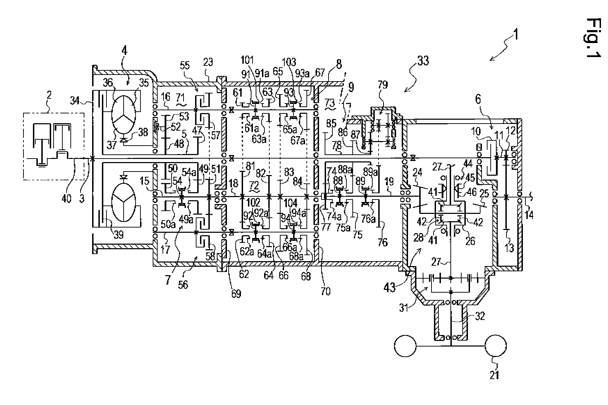

An entire construction of a working vehicle transmission system 1 according to the first embodiment will be described with reference to Fig. 1. Especially, working vehicle transmission system 1 is adapted to a four-wheel drive agricultural tractor equipped with a prime mover 2, such as an engine or an electric motor, and includes a gear transmission 33 for speed-changing the rotary power stepwise from prime mover 2 (hereinafter, this rotary power is referred to as "prime mover power").

Gear transmission 33 serving as a multistage transmission is disposed in a transmission casing 23, and includes a main input shaft 3 projecting outward from transmission casing 23 to be drivingly connected to an output shaft ( or if prime mover 2 is an engine, a crankshaft) 40 of prime mover 2. In gear transmission 33, a cylindrical reverser input shaft (or a torque converter output shaft) 5 is relatively rotatably fitted on main input shaft 3. A lock-up control torque converter 4 (which can be locked up) is interposed between main input shaft 3 and reverser input shaft 5. Therefore, the prime mover power is inputted to speed-change gears of gear transmission 33 via main input shaft 3, torque converter 4 and reverser input shaft 5.

To constitute torque converter 4, a front cover 34 is fixed onto main input shaft 3, a pump impeller 35 is connected to front cover 34, a turbine liner 36 is connected to reverser input shaft 5, and a stator 37 is supported by a front wall of transmission casing 23 via an one way clutch 38. A lock up clutch 39 is interposed between front cover 34 and turbine liner 36. A later-discussed lock up control mechanism 80, including lock up clutch 39, changes a state of engagement between main input shaft 3 and reverser input shaft 5.

Main input shaft 3 fixed to front cover 34 is extended rearward in transmission casing 23 so as to be provided on a rear end thereof with a hydraulic multi-friction disc type PTO clutch 10 through which main input shaft 3 is drivingly connected to a PTO transmission shaft 11. A diametrically small gear 12 is fixed on PTO transmission shaft 11, a PTO shaft 14 is disposed in parallel to PTO transmission shaft 11, and a diametrically large gear 13 is fixed on PTO shaft 14 and meshes with gear 12, so as to constitute a PTO deceleration gear train 6. Therefore, the prime mover power is transmitted from main input shaft 3 to PTO shaft 14 via engaged PTO clutch 10 and PTO deceleration gear train 6.

In transmission casing 23, gear transmission 33 includes a reverser 7, a main speed-change mechanism 8 and a sub speed-change mechanism 9. Reverser 7, main speed-change mechanism 8 and sub speed-change mechanism 9 are interposed in series in downstream order between main input shaft 3 and a final output shaft 19 so as to transmit the prime mover power from main input shaft 3 to final output shaft 19.

A bevel final pinion 24 is fixed on a rear end of final output shaft 19, and meshes with a bevel bull gear 25 serving as an input gear of a differential gear unit 43, including a differential cage 26, a differential bevel gear mechanism 28, and left and right differential yoke shafts 27. Bull gear 25 is fixed on (or formed integrally with) differential cage 26. Differential bevel gear mechanism 28 is disposed in differential cage 26. Bevel differential pinions 42 are pivoted in differential cage 26, and left and right bevel differential side gears 41 are fixed on proximal ends of left and right differential yoke shafts 27 in differential cage 26, so as to constitute differential bevel gear mechanism 28.

Left and right rear axles 32 are connected to distal ends of respective differential yoke shafts 27 via respective final deceleration gear units 31. Rear wheels 21 are fixed on outer ends of respective rear axles 32. Therefore, the power outputted from final output shaft 19 is transmitted to left and right rear wheels 21 via differential gear unit 43 and final deceleration gear units 31.

Differential gear unit 43 is provided with a differential lock mechanism 44. In differential locking mechanism 44, a differential lock slider 45 is fixedly provided with differential lock pins 46, left and right end boss portions of differential cage 26 are relatively rotatably fitted on respective left and right differential yoke shafts 27, and differential lock slider 45 is axially slidably fitted on one of the left and right end boss portions of differential cage 26. When a differential lock operation device on the working vehicle is operated for differential locking, differential lock slider 45 slides on the boss portion of differential cage 26 to insert differential lock pins 46 into pin holes bored in corresponding differential side gear 41, so as to lock differential cage 26 to both differential yoke shafts 27, i.e., rear axles 32, thereby canceling the differential rotatability of rear wheels 21.

In this way, working vehicle transmission system 1 speed-changes the prime mover power and transmits it to rear wheels 21 (and front wheels) for traveling of the working vehicle equipped with transmission system 1, and also transmits the prime mover power to PTO shaft 14 so as to drive a working device (not shown) drivingly connected to PTO shaft 14.

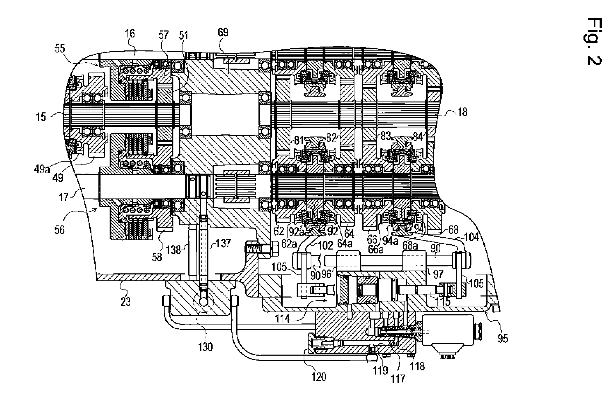

A construction of gear transmission 33 will be described with reference to Figs. 1 to 3 and 5. A reverser output shaft 15, a first main speed-change shaft 16, a second main speed-change shaft 17, a main speed-change output shaft (or a sub speed-change input shaft) 18 and final output shaft (or a sub speed-change output shaft) 19 are fore-and-aft extended in parallel to reverser input shaft 5, and are journalled in transmission casing 23.

A forward-traveling driving gear 47 and a backward-traveling driving gear 48 are fixed on reverser input shaft 5. A forward-traveling driven gear 49 and a backward-traveling driven gear 50 are relatively rotatably fitted on reverser output shaft 15. Forward-traveling driving gear 47 and forward-traveling driven gear 49 directly mesh with each other. Backward-traveling driving gear 48 and backward-traveling driven gear 50 mesh with each other via an idle gear 53 provided on a fore-and-aft extended counter shaft 52.

A spline hub 54 is fixed on reverser output shaft 15 between forward-traveling driven gear 49 and backward-traveling driven gear 50, and a shifter 54a is axially slidably and relatively unrotatably fitted on spline hub 54. End portions of driven gears 49 and 50 facing shifter 54a therebetween are formed as respective clutch-toothed portions 49a and 50a. Therefore, driven gears 49 and 50 and shifter 54a constitute reverser 7.

By engaging either clutch-toothed portion 49a or 50a with shifter 54a, corresponding driven gear 49 or 50 is relatively unrotatably engaged to reverser output shaft 15 so as to transmit either a forward-traveling directed rotary power (hereinafter referred to as "forward-traveling rotary power") or a backward-traveling directed rotary power (hereinafter referred to as "backward-traveling rotary power") from reverser input shaft 5 to reverser output shaft 15.

A first clutch 55 for establishing odd-numbered speed stages is provided on first main speed-change shaft 16, and a second clutch 56 for establishing even-numbered speeds is provided on second main speed-change shaft 17. First and second clutches 55 and 56 are hydraulic friction multi-disc clutches. A first clutch input gear 57 is relatively rotatably fitted on first main speed-change shaft 16, and is able to be relatively unrotatably engaged to first main speed-change shaft 16 via engaged first clutch 55. A hydraulic cylinder (or first clutch control cylinder) 59 is provided as an actuator for operating first clutch 55.

A second clutch input gear 58 is relatively rotatably fitted on second main speed-change shaft 17, and is able to be relatively unrotatably engaged to second main speed-change shaft 17 via engaged second clutch 56. A hydraulic cylinder (or second clutch control cylinder) 60 is provided as an actuator for operating second clutch 56. Each of clutch control cylinders 59 and 60 is hydraulically controlled so as to gradually change the torques transmitted through corresponding first or second clutch 55 or 56 until the disengaged clutch is completely engaged. Both of first and second clutch input gears 57 and 58 constantly mesh with a distribution gear 51 fixed on clutch input shaft 15.

Therefore, one of first and second clutches 55 and 56 is engaged, and the other clutch 55 or 56 is disengaged, so as to transmit either the forward-traveling rotary power or the backward-traveling rotary power to either the first or second main speed-change shaft 16 or 17.

As mentioned above, reverser 7 is disposed downstream of torque converter 4, and first and second clutches 55 and 56 are disposed downstream of reverser 7. Usually, reverser 7 causes a great torque change during shifting. However, in this embodiment, the portion of reverser 7 for determining either the forward or backward-traveling rotation direction is provided on reverser output shaft 15 disposed adjacent to reverser input shaft 5 extended from torque converter 4. Therefore, the power loss caused by the shift of reverser 7 is greatly reduced so as to improve the efficiency of outputting power from reverser 7. Further, first and second clutches 55 and 56 are disposed close to reverser 7 so as to reduce the gap therebetween, thereby minimizing gear transmission 33.

Transmission casing 23 is provided therein with a front bearing partition wall 69 and a rear bearing partition wall 70, so that the inner space of transmission casing 23 is divided into three chambers 71, 72 and 73, i.e., a first chamber 71 in front of front bearing partition wall 69, a second chamber 72 between front and rear bearing partition walls 69 and 70, and a third chamber 73 behind rear bearing partition wall 70. Reverser 7 and first and second clutches 55 and 56 are disposed in first chamber 71. Main speed-change mechanism 8 is disposed in second chamber 72. Sub speed-change mechanism 9 is disposed in third chamber 73.

In main speed-change mechanism 8 in second chamber 72, first main speed-change shaft 16 for odd-numbered speed stages is relatively rotatably provided thereon with driving gears 61, 63, 65 and 67, i.e., a first speed driving gear 61, a third speed driving gear 63, a fifth speed driving gear 65 and a seventh speed driving gear 67, and second main speed-change shaft 17 for even-numbered speed stages is relatively rotatably provided thereon with driving gears 62, 64, 66 and 68, i.e., a second speed driving gear 62, a fourth speed driving gear 64, a sixth speed driving gear 66 and an eighth speed driving gear 68. Four driven gears 81, 82, 83 and 84 are fixed on main speed output shaft 18. First driven gear 81 constantly meshes with first and second speed driving gears 61 and 62. Second driven gear 82 constantly meshes with third and fourth speed driving gears 63 and 64. Third driven gear 83 constantly meshes with fifth and sixth speed driving gears 65 and 66. Fourth driven gear 84 constantly meshes seventh and eighth speed driving gears 67 and 68.

Therefore, main speed-change mechanism 8 includes eight main speed-change gear trains, i.e., a first speed gear train including gears 61 and 81, a second speed gear train including gears 62 and 81, a third speed gear train including gears 63 and 82, a fourth speed gear train including gears 64 and 82, a fifth speed gear train including gears 65 and 83, a sixth speed gear train including gears 66 and 83, a seventh speed gear train including gears 67 and 84, and an eighth speed gear train including gears 68 and 84. The odd-numbered speed gear trains are interposed between first main speed-change shaft 16 and main speed-change output shaft 18, and the even-numbered speed gear trains are interposed between second main speed-change shaft 17 and main speed-change output shaft 18.

On first main speed-change shaft 16 are fixed a spline hub 91 between first and third speed driving gears 61 and 63, and a spline hub 93 between fifth and seventh speed driving gears 65 and 67. On second main speed-change shaft 17 are fixed a spline hub 92 between second and fourth speed driving gears 62 and 64, and a spline hub 94 between sixth and eighth speed driving gears 66 and 68. A shifter 91 a is axially slidably and relatively unrotatably fitted on spline hub 91, and similarly, a shifter 92a on spline hub 92, a shifter 93a on spline hub 93, and a shifter 94a on spline hub 94.

First and third speed driving gears 61 and 63 are formed with respective clutch-toothed portions 61a and 63a on respective portions thereof facing spline hub 91 therebetween. Second and fourth speed driving gears 62 and 64 are formed with respective clutch-toothed portions 62a and 64a on respective portions thereof facing spline hub 92 therebetween. Fifth and seventh speed driving gears 65 and 67 are formed with respective clutch-toothed portions 65a and 67a on respective portions thereof facing spline hub 93 therebetween. Sixth and eighth speed driving gears 66 and 68 are formed with respective clutch-toothed portions 66a and 68a on respective portions thereof facing spline hub 94 therebetween.

By engaging one of clutch-toothed portions 61a, 63a, 65a and 67a with shifter 91a or 93a, corresponding driving gear 61, 63, 65 or 67 is relatively unrotatably engaged to first main speed-change shaft 16. By engaging one of clutch-toothed portions 62a, 64a, 66a and 68a with shifter 92a or 94a, corresponding driving gear 62, 64, 66 or 68 is relatively unrotatably engaged to second main speed-change shaft 17.

While one of first and second clutches 56 and 57 is selectively engaged to rotate corresponding first or second main speed-change shaft 16 or 17 by either the forward or backward-traveling rotary power outputted from reverser 7, one of the eight gear trains of main speed-change mechanism 8 is selected to transmit power from rotated first or second main speed-change shaft 16 or 17 to main speed-change output shaft 18.

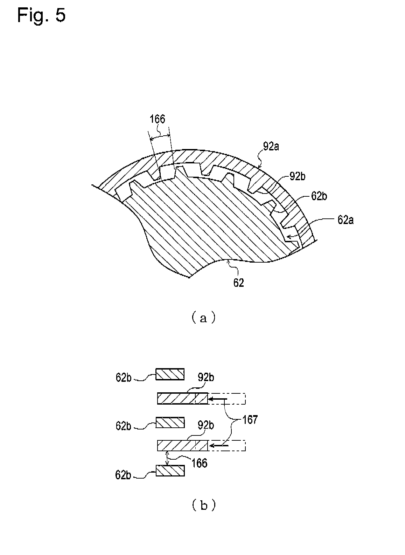

A sleeve of each of shifters 91a, 92a, 93a and 94a is formed on the inner periphery thereof with radial dogs, and each of clutch-toothed portions 61 a, 62a, 63a, 64a, 65a, 66a, 67a and 68a is formed on the outer periphery thereof with radial dogs corresponding to the dogs of corresponding shifter 91a, 92a, 93a or 94a. Fig. 5(a) and Fig. 5(b) illustrate shifter 92a having dogs 92b and clutch-toothed portion 62a having dogs 62b, which are representative of all shifters 91a, 92a, 93a and 94a and all clutch-toothed portions 61a, 62a, 63a, 64a, 65a, 66a, 67a and 68a. Each dog 92b is adapted to be inserted into a gap between any neighboring dogs 62b, so that dogs 92b can be retained by respective dogs 62b. The gap of each pair of neighboring dogs 62b is so large as to have a space 166, as shown in Fig. 5(a), from dog 92b inserted into the gap sufficiently to be prevented from obstructing dog 92b being inserted into the gap in a direction designated by an arrow 167 in Fig. 5(b). By inserting dogs 92b into the gaps among dogs 62b, shifter 92a can be smoothly engaged to clutch-toothed portion 62a of second speed driving gear 62.

Due to the sufficient spacing between dogs of the shifter and dogs of the clutch-toothed portion for preventing hitting the dogs of the shifter against the dogs of the clutch-toothed portion, no additional synchromesh mechanism requiring complicated chamfering of the dogs is required to be interposed between the shifter and the clutch-toothed portion. Therefore, the relevant parts of the mechanism for engaging the shifter to the driving gear are free from frictional heat caused by the synchromesh mechanism, thereby prolonging their lives, and being reduced in number so as to simplify, miniaturize and economize main speed-change mechanism 8.

Main speed-change output shaft 18 is extended rearward into third chamber 73 through rear bearing partition wall 70, so as to be connected to sub speed-change mechanism 9 in third chamber 73. In sub speed-change mechanism 9, a rearwardly opened cylindrical high speed shaft 74 is fixed at a front end thereof onto the rear end of main speed-change output shaft 18. A front end of final output shaft 19 is relatively rotatably fitted into high speed shaft 74. A low speed gear 75 and a creep gear 76 are relatively rotatably fitted on final output shaft 19 outside of high speed shaft 74.

In third chamber 73, a cylindrical sub speed-change shaft 78 is relatively rotatably fitted on an intermediate portion of main input shaft 3. A diametrically large gear 85, a diametrically middle gear 86 and a diametrically small gear 87 are fixed on sub speed-change shaft 78. Diametrically large diameter gear 85 meshes with a gear 77 fixed on high speed shaft 74. Diametrically middle diameter gear 86 meshes with low speed gear 75. Diametrically small gear 87 meshes with creep gear 76 via a deceleration device 79. In this way, sub speed-change mechanism 9 includes a high speed drive train, a low speed gear train and a creep gear train. The high speed drive train includes high speed shaft 74 adapted to directly connect (i.e., lock) main speed-change output shaft 18 to final output shaft 19 in a later-mentioned manner. The low speed gear train includes gear 77, diametrically large gear 85, diametrically middle gear 86 and low speed gear 75. The creep gear train includes gear 77, diametrically large gear 85, diametrically small gear 87, deceleration device 79 and creep gear 76.

On final output shaft 19 are fixed a spline hub 88 between high speed shaft 74 and low speed gear 75, and a spline hub 89 between low speed gear 75 and creep gear 76. Shifters 88a and 89a are axially slidably and relatively unrotatably fitted on respective spline hubs 88 and 89. Portions of high speed shaft 74 and low speed gear 75 facing spline hub 88 therebetween are formed as respective clutch-toothed portions 74a and 75a. A portion of creep gear 76 facing spline hub 89 is formed as a clutch-toothed portion 76a.

By engaging one of clutch-toothed portions 74a, 75a and 76a with either shifter 88a or 89a, the corresponding shaft or gear is relatively unrotatably engaged to final output shaft 19, so as to selectively activate one of the drive trains of sub speed-change mechanism 9, i.e., the high speed drive train, the low speed gear train or the creep gear train, thereby transmitting power to final output shaft 19. The rotary power of final output shaft 19 is transmitted to differential gear unit 43 and final deceleration gear units 31 to rear wheels 21, as mentioned above.

Figs. 1 to 3 indicate a system and a manner for controlling the shifters and clutches of main speed-change mechanism 8. A first fork 101 is engaged on shifter 91a, a second fork 102 on shifter 92a, a third fork 103 on shifter 93a, and a fourth fork 104 on shifter 94a. Forks 101, 102, 103 and 104 have respective bosses fixed on respective fore-and-aft horizontal shifter shafts 90 which are axially slidably extended in parallel between front and rear bearing partition walls 96 and 97 extended from a shifter casing 95 provided on transmission casing 23. By fore-and-aft sliding one of shifter shafts 90, one of the corresponding forks 101, 102, 103 or 104 slides together with this shifter shaft 90 in the fore-and-aft direction.

By the sliding of first fork 101, shifter 91 a slides to selectively engage one of driving gears 61 and 63 to spline hub 91, thereby establishing either the first or third speed. By the sliding of second fork 102, shifter 92a slides to selectively engage one of driving gears 62 and 64 to spline hub 92, thereby establishing either the second or fourth speed. By the sliding of third fork 103, shifter 93a slides to selectively engage one of driving gears 65 and 67 to spline hub 93, thereby establishing either the fifth or seventh speed. By the sliding of fourth fork 104, shifter 94a slides to selectively engage one of driving gears 66 and 68 to spline hub 94, thereby establishing either the sixth or eighth speed.

In shifter casing 95, first, second, third and fourth hydraulic cylinders 111, 112, 113 and 114 are extended fore-and-aft horizontally and are disposed in parallel. Hydraulic cylinders 111, 112, 113 and 114 include respective piston rods 115. Connection arms 105 are extended from tip ends of respective piston rods 115, and are connected at tip ends thereof to ends of respective shifter shafts 90.

A piston 100 including first and second pistons 98 and 99 is fitted in first hydraulic cylinder 111 so as to divide the inner space of first hydraulic cylinder 111 into fluid chambers 109 and 110. First piston 98 is fixed on an inner end of corresponding piston rod 115. First piston 98 includes a large diameter portion 98a and a small diameter portion 98b. In first hydraulic cylinder 111, cylindrical second piston 99 is axially slidably fitted on small diameter portion 98b of first piston 98. Second piston 99 has a larger outer diameter than that of large diameter portion 98a of first piston 98. Second piston 99 is constantly biased toward large diameter portion 98a by a spring or the like, so as to be prevented from escaping from small diameter portion 98b. A solenoid valve 121 is connected to fluid chamber 109 via a fluid passage 125a, and to fluid chamber 110 via a fluid passage 125b.

To establish the neutral state of first hydraulic cylinder 111, solenoid valve 121 supplies pressurized fluid to both fluid chambers 109 and 110 via fluid passages 125a and 125b. Since one side area of piston 100 receiving the pressure of fluid in fluid chamber 110 is larger than the other side area of piston 100 receiving the pressure of fluid in fluid chamber 109, piston 100 moves toward fluid chamber 109, and finally, an axial end surface of second piston 99 abuts against a shoulder 95a formed in shifter casing 95, thereby retaining piston 100 at this position defined as a neutral position of piston 100. In this way, the neutral position of piston 100 can be accurately established.

To establish the first speed of main speed-change mechanism 8, solenoid valve 121 prevents fluid flow to fluid chamber 109 while allowing fluid flow to fluid chamber 110, so that the fluid in fluid chamber 110 thrusts piston 100 toward fluid chamber 109. Therefore, while second piston 99 is retained by shoulder 95a, first piston 98 slides and finally reaches an axially outer end of fluid chamber 109, i.e., a first speed position of piston 100, To establish the third speed of main speed-change mechanism 8, solenoid valve 121 prevents fluid flow to fluid chamber 110 while allowing fluid flow to fluid chamber 109, so that the fluid in fluid chamber 109 thrusts piston 100 toward fluid chamber 110. Therefore, piston 100, i.e., first and second pistons 98 and 99, slides and finally reaches an axially outer end of fluid chamber 110, i.e., a third speed position of piston 100.

Each of the remaining hydraulic cylinders 112, 113 and 114 is provided with similar piston 100 (with first and second pistons 98 and 99) and fluid chambers 109 and 110, A solenoid valve 122 is provided to supply fluid to fluid chambers 109 and 110 of second hydraulic cylinder 112 via respective fluid passages 126a and 126b, so as to shift piston 100 of second hydraulic cylinder 112 among a neutral position, a second speed position and a fourth speed position. A solenoid valve 123 is provided to supply fluid to fluid chambers 109 and 110 of third hydraulic cylinder 113 via respective fluid passages 127a and 127b, so as to shift piston 100 of third hydraulic cylinder 113 among a neutral position, a fifth speed position and a seventh speed position. A solenoid valve 124 is provided to supply fluid to fluid chambers 109 and 110 of fourth hydraulic cylinder 114 via respective fluid passages 128a and 128b, so as to shift piston 100 of fourth hydraulic cylinder 114 among a neutral position, a sixth speed position and an eighth speed position.

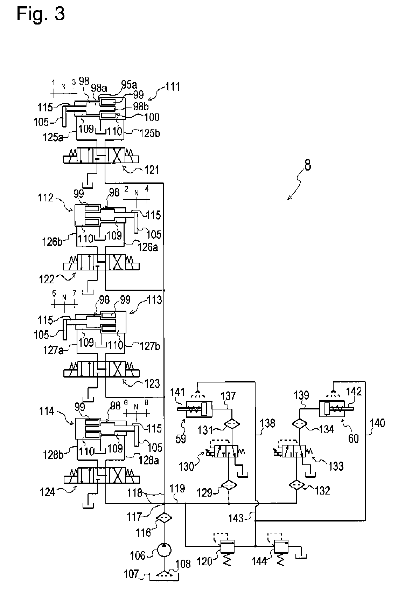

Due to this structure, the moment that prime mover 2 starts, all of solenoid valves 121, 122, 123 and 124 are unexcited as shown in Fig. 3, so as to set main speed-change mechanism 8 in the neutral state. When a command signal for establishing one of the eight speeds is transmitted to one of solenoid valves 121, 122, 123 and 124, the commanded solenoid valve moves its piston 100 so as to move one of the corresponding forks 101, 102, 103 or 104 via piston rod 115 and connection arm 105, thereby engaging one of the corresponding shifters 91 a, 92a, 93a or 94a to one of the corresponding driving gears 61, 62, 63, 64, 65, 66, 67 or 68. Due to the engaging of the shifter to the driving gear, the drive train for the target speed is established for transmitting the rotary force of either first or second main speed-change shaft 16 or 17 to main speed-change output shaft 18 to be speed-changed by sub speed-change mechanism 9.

A pump 106 is disposed in transmission casing 23 so as to be driven by main input shaft 3 driven by the prime mover power. Pump 106 sucks fluid from a tank 107 through a fluid filter 108, and delivers fluid to a bifurcating port 117 through a line filter 116. Bifurcating port 117 bifurcates into a speed-change fluid passage 118 and a clutch control fluid passage 119. The maximum pressure of fluid in clutch control fluid passage 119 is determined by a high-pressure relief valve 120 for protecting the hydraulic circuit, and the fluid in clutch control fluid passage 119 is supplied to first clutch control hydraulic cylinder 59 via a line filter 129, a proportional decompression solenoid valve 130, a line filter 131 and a clutch-operation fluid passage 137, and is also supplied to second clutch control cylinder 60 via a line filter 132, a proportional decompression solenoid valve 133, a line filter 134 and a clutch-operation fluid passage 139.

Due to proportional decompression solenoid valves 130 and 133, the movement of pistons 141 and 142 of respective first and second clutch control cylinders 59 and 60 are moderated. For instance, if each of first and second clutches 55 and 56 is a multi friction disc clutch, each of pistons 141 and 142 moves to gradually change the force mutually pressing the friction discs, thereby gradually changing the transmitted torque in corresponding clutch 55 or 56 until clutch 55 or 56 is completely engaged.

A fluid passage 143 is extended downstream from relief valve 120, and a relief valve 144 is provided on fluid passage 143 so as to determine the maximum pressure of lubricating fluid and to supply fluid to first and second clutches 55 of main speed-change mechanism 8 via respective lube passages 138 and 140.

A representative speed-change pattern of gear transmission 33 from a forward high-first speed to a forward high-second speed will now be described. The forward high-first speed of gear transmission 33 is established by setting the forward driving stage of reverser 7, the high speed stage of sub speed-change mechanism 9, and the first speed stage of main speed-change mechanism 8. The forward high-second speed of gear transmission 33 is established by setting the forward driving stage of reverser 7, the high speed stage of sub speed-change mechanism 9, and the first speed stage of main speed-change mechanism 8. Therefore, this speed-change is realized by speed-changing only main speed-change mechanism 8 while keeping the stages of reverser 7 and sub speed-change mechanism 9. Presently, the forward high-first speed is referred to as "forward first speed", and the forward high-second speed is referred to as "forward second speed".

While the vehicle travels at the forward first speed, first clutch 55 is kept engaged, and shifter shaft 90 of first fork 101 is held at the first speed position to engage shifter 91a to first speed driving gear 61, so that main speed-change output shaft 18 is connected to first main speed-change shaft 16 having first clutch 55 thereon via the first speed gear train including gears 61 and 81. In this state, the forward driving power outputted from reverser 7 is transmitted to first main speed-change shaft 16 via reverser output shaft 15 and engaged first clutch 55, and is transmitted to main speed-change output shaft 18 via the first speed gear train as a forward first speed power to be outputted to sub speed-change mechanism 9. Meanwhile, second clutch 56 is kept disengaged so as to hold shifter shaft 90 of second fork 102, thereby keeping the neutral position of shifter 92a.

When a later-discussed accelerator pedal 20 is depressed, a later-discussed controller 151 issues a command for a change in speed from the forward first speed to the forward second speed due to the detection of the depression of accelerator pedal 20 or the detection of actual traveling speed of the working vehicle ("vehicle speed"). At this time, first clutch 55 is still kept engaged to hold the engagement of the first speed gear train including gears 61 and 81 to first main speed-change shaft 16, and second clutch 56 is still kept disengaged. Solenoid valve 122 is shifted to move piston 100 of second hydraulic cylinder 112, so as to move shifter shaft 90 of second fork 102 to the second speed position, thereby sliding shifter 92a from the neutral position to the second speed driving position where shifter 92a engages with second speed driving gear 62 to drivingly connect main speed-change output shaft 18 to second main speed-change shaft 17 having second clutch 56 thereon via the second speed gear train including gear 62 and 81. However, second clutch 56 is kept disengaged to separate second main speed-change shaft 17 from the forward driving output power of reverser 7, thereby preventing the power train of gear transmission 33 from an excessive stress caused by the driving connection of the second speed gear train to second main speed-change shaft 17.

On the passage of a considerable amount of time after controller 151 issues the initial command signal for engaging the second gear train to second main speed-change shaft 17, controller 151 then issues a new command signal to gradually disengage first clutch 55, and to gradually engage second clutch 56. Therefore, solenoid valves 130 and 133 are proportionally controlled to gradually move pistons 141 and 142 of respective first and second clutch control cylinders 59 and 60. The disengagement movement of first clutch 55 and the engagement movement of second clutch 56 are gradually and simultaneously performed.

After a while, first clutch 55 is completely disengaged, and second clutch 56 is completely engaged. During the issue of the command to gradually disengage first clutch 55 and to gradually engage second clutch 56, both the driving connection of the first speed gear train to first main speed-change shaft 16 and the driving connection of the second speed gear train to second main speed-change shaft 17 are kept, so that the power transmitted from first main speed-change shaft 16 to the first speed gear train (i-e., gears 61 and 81) is gradually reduced by the gradual disengagement movement of first clutch 55, and the power transmitted from second main speed-change shaft 17 to the second speed gear train (i.e., gears 62 and 82) is gradually increased by the gradual engagement movement of second clutch 56. Consequently, the speed of the forward rotary power from reverser 7 to main speed-change output shaft 18 is turned from the first speed created by the first speed gear train to the second speed created by the second speed gear train without interruption.

On the further passage of a time, i.e., after first clutch 55 is completely disengaged and second clutch 56 is completely engaged, controller 151 issues a command to finish the clutch operation for speed-change. Therefore, while second clutch 56 is kept disengaged and the driving connection of the second speed gear train (gears 62 and 82) to second main speed-change shaft 17 is kept, the first speed gear train (gears 61 and 81) is drivingly disconnected from first main speed-change shaft 16. In this regard, solenoid valve 121 is shifted to move piston 100 of first clutch control cylinder 111 so as to move shifter shaft 90 of first fork 101 to the neutral position, thereby sliding shifter 91 a to the neutral position from the first speed driving position where shifter 91a engages with first speed driving gear 61. In this way, in the condition that first clutch 55 is disengaged and second clutch 56 is engaged, the first speed gear train including gears 61 and 81 is drivingly connected from first main speed-change shaft 16 having disengaged first clutch 55 thereon so as to complete the speed-change from the forward first speed to the forward second speed. In this regard, since first clutch 55 has been disengaged, the disconnection movement of the first speed gear train (gears 61 and 81) from first main speed-change shaft 16 causes no excessive stress onto the power train of gear transmission 33.

The other speed-change operations of main speed-change mechanism 8 are performed in the same manner as mentioned above. That is, at first, the target speed gear train is engaged to either first or second main speed-change shaft 16 or 17, then, clutches 55 and 56 are operated so that one clutch is engaged and the other clutch is disengaged, and finally, the speed gear train previously engaged to the other main speed-change shaft 16 or 17 is disengaged therefrom.

As mentioned above, gear transmission 33 serving as a multistage transmission includes first clutch 55 for the odd-numbered speeds, i.e., the first, third, fifth and seventh speeds, and second clutch 56 for the even-numbered speeds, i.e., the second, fourth, sixth and eighth speed. In gear transmission 33, main speed-change mechanism 8 is controlled so that, while one odd-numbered speed gear train and one even-number speed gear train are effected to drive, the engagement movement of one clutch 55 or 56 and the disengagement movement of the other clutch 56 or 55 are performed to overlap each other, thereby ensuring the speed-change of main speed-change mechanism 8 without interruption of power transmission from prime mover 2 to rear axles 32. Such a speed-changing ability improves driving operation and stability of the traveling vehicle in comparison to the speed-changing abilities of the conventional multistage-change mechanism requiring interruption of the power transmission.

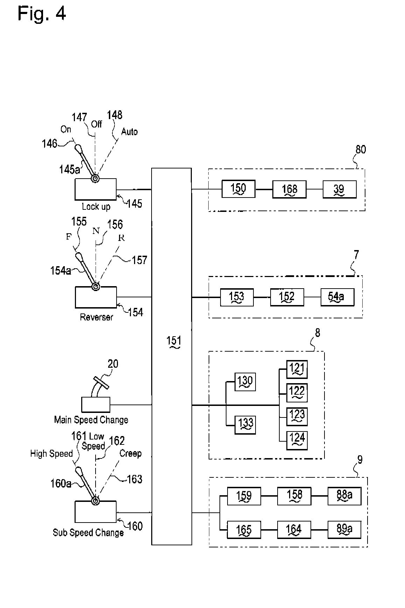

The construction for speed changing by use of torque converter 4 and gear transmission 33 will be described with reference to Figs. 1, 4 and 10. With regard to torque converter 4, lock up control mechanism 80 includes a lock up clutch 39, a hydraulic cylinder 168 for controlling lock up clutch 39, and a solenoid valve 150 for controlling the fluid supply to hydraulic cylinder 168. Solenoid valve 150 is connected to above-mentioned controller 151. Controller 151 is provided with a lock up switch 145 for determining engagement/disengagement of lock up clutch 39. Lock up switch 145 is provided with a lock up lever 145a. By operating lock up lever 145a, the fluid supply of solenoid valve 150 to hydraulic cylinder 168 is controlled to engage or disengage lock up clutch 39. When lock up lever 145a is set at a lock-up on position 146, lock up clutch 39 is tightly fitted to front cover 34 so as to establish a lock-up on state where main input shaft 3 is directly connected (locked) to reverser input shaft 5 via torque converter 4 which is locked up (i.e., without the function of torque converter 4). When lock up lever 145a is set at a lock-up off position 147, lock up clutch 39 is separated from front cover 34 so as to establish a lock-up off state where main input shaft 3 is connected to reverser input shaft 5 via torque converter 4 which is not locked up (i.e., with the function of torque converter 4). When lock up lever 145a is set at an automatic control position 148, lock up clutch 39 is automatically switched between the lock-up on state and the lock-up off state.

Solenoid valves 121, 122, 123, 124, 130 and 133 and accelerator pedal 20 for changing the rotary speed of prime mover 2 are connected to controller 151, so that one of the first to eighth speeds is automatically selected to correspond to the depression degree of accelerator pedal 20 and/or the actual speed of traveling vehicle 1. A main speed shift manipulator may also be provided for manually selecting one of the first to eighth speeds.

With respect to reverser 7, a hydraulic cylinder 152 serving as an actuator for operating shifter 54a is fluidly connected to a solenoid valve 153 controlled by controller 151. A reverser switch 154 is connected to controller 151 and is provided with a reverser lever 154a serving as a manipulator for switching forward/backward driving direction. When reverser lever 154a is set at a forward traveling position 155, shifter 54a is engaged to clutch-toothed portion 49a of forward-traveling driven gear 49 so as to transmit a forward-traveling rotary power to reverser output shaft 15. When reverser lever 154a is set at a neutral position 156, shifter 54a is disengaged from clutch-toothed portions 49a and 50a of both forward-traveling driven gear 49 and backward-traveling driven gear 50 so as to isolate reverser output shaft 15 from the prime mover power. When reverser lever 154a is set at a backward traveling position 157, shifter 54a is engaged to clutch-toothed portion 50a of backward-traveling driven gear 50 so as to transmit a backward-traveling rotary power to reverser output shaft 15.

With respect to sub speed-change mechanism 9, a hydraulic cylinder 158 serving as an actuator for operating shifter 88a is fluidly connected to a solenoid valve 159 controlled by controller 151, and a hydraulic cylinder 164 serving as an actuator for operating shifter 88a is fluidly connected to a solenoid valve 165 controlled by controller 151. A sub speed-change switch 160 is connected to controller 151 and is provided with a sub speed-change lever 160a serving as a manipulator for setting sub speed stages. When sub speed-change lever 160a is set at a high speed position 161, shifter 88a is engaged to clutch-toothed portion 74a of high speed shaft 74 so as to transmit power from main speed-change output shaft 18 to final output shaft 19 via the high speed drive train. When sub speed-change lever 160a is set at a low speed position 162, shifter 88a is engaged to clutch-toothed portion 75a of low speed gear 75 so as to transmit power from main speed-change output shaft 18 to final output shaft 19 via the low speed drive train. When sub speed-change lever 160a is set at a creep position 163, shifter 89a is engaged to clutch-toothed portion 76a of creep gear 76 so as to transmit power from main speed-change output shaft 18 to final output shaft 19 through the creep drive train.

Due to the above construction, when the working vehicle is stationary (i.e., a brake pedal is depressed), reverser 7 is set at either the forward driving state or the backward driving state, and sub speed-change mechanism 9 is set at one of the high speed state, the low speed stage or the creep stage. Then, a brake pedal is released and accelerator pedal 20 is depressed so as to start the working vehicle. As the traveling speed of the working vehicle is increased, solenoid valves 121, 122, 123, 124, 130 and 133 are controlled according to a vehicle speed signal issued from a vehicle speed sensor (not shown), so as to automatically select one of the first to eighth speeds to correspond to the detected actual speed of the traveling working vehicle.

When lock up lever 145a is set at lock-up on position 146, lock up clutch 39 is tightly fitted to front cover 34 as mentioned above so as to directly connect (lock) main input shaft 3 to reverser input shaft 5 through locked-up torque converter 4, so that the prime mover power is transmitted to gear transmission 33 including main and sub speed-change mechanisms 8 and 9 without the function of torque converter 4, Therefore, the working vehicle can travel in a low speed range free from power loss and unstable speed-change caused by the torque change of torque converter 4. For example, the working vehicle can travel while working on a round and soft field at a constant speed regardless of great variation of torque. Furthermore, in comparison with the case where torque converter 4 with fluid is used, the power loss is reduced so as to ensure the stability of working speed and to improve the power transmission efficiency, thereby ensuring high working efficiency. This mode of working vehicle transmission system 1 is referred to as "a working traveling mode". In the working traveling mode, the speed of the output rotary power of gear transmission 33 to axles 32 is changed among plural stages.

When lock up lever 145a is set at lock-up off position 147, lock up clutch 39 is separated from front cover 34 so as to connect main input shaft 3 to reverser input shaft 5 via torque converter 4 which is not locked up, so that the prime mover power is transmitted to gear transmission 33 including main and sub speed-change mechanisms 8 and 9 by the function of torque converter 4. Therefore, the working vehicle can travel in a high speed range where torque converter 4 automatically changes the torque of the prime mover power into a torque convenient to the traveling speed of the working vehicle out of work. This mode of the working vehicle is referred to as "a non-working traveling mode". In the non-working traveling mode, gear transmission 33 is able to perform the multistage speed-change, and torque converter 4 changes the torque so as to effect the smooth speed-shift when any speed stage of gear transmission 33 (more specifically, main speed-change mechanism 8). In this way, appropriate operability and traveling stability of the working vehicle is ensured because torque converter 4 automatically changes the torque to a value for enabling the working vehicle to travel at an appropriate speed during changing of the traveling speed of the working vehicle.

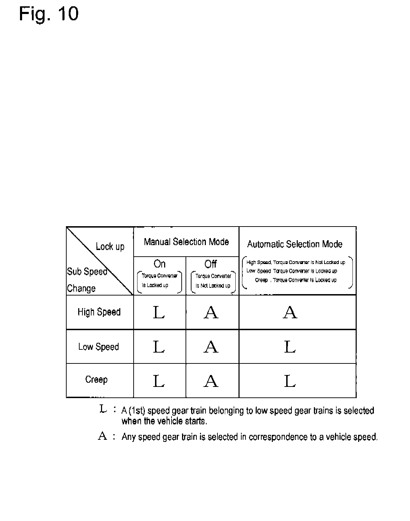

When lock up lever 145a is set at automatic control position 148, lock up clutch 39 is automatically controlled so as to automatically determine either the non-working traveling mode or the working traveling mode. For instance, when sub speed-change lever 160a is set at high speed position 161 so as to select the high speed stage of sub speed-change mechanism 9, the non-working traveling mode is automatically selected, whereas, when sub speed-change lever 160a is set at low speed position 162 or creep position 163 so as to select either the low speed stage or the creep stage of sub speed-change mechanism 9, the working speed traveling mode is automatically selected. Therefore, once reverser lever 154a is set at either forward traveling position 155 or backward traveling position 157 so as to select either the forward traveling or the backward traveling and sub sped change lever 160a is set at one of positions 161, 162 and 163 so as to select one of the speed stages of sub speed-change mechanism 9 during the stationary state of the working vehicle, only depression of acceleration pedal 20 is enough for speed-change during traveling of the working vehicle so that an operator does not have to select whether lock up clutch 39 is engaged or disengaged. Alternatively, the automatic control of lock up clutch 39 may be performed according to selection of the traveling direction with reverser 7 or according to selection of the speed stage of main speed-change mechanism 8. In this way, as shown in Fig. 10, such a mode for automatically selecting whether torque converter 4 is locked up or not in correspondence to the set state of gear transmission 33 (e.g., the set speed stage of sub speed-change mechanism 9) is referred to as an automatic selection mode. By setting lock up lever 145a at automatic control position 148, working vehicle transmission system 1 is put into the automatic selection mode.

Conversely, unless lock up lever 145a is set at automatic control position 148, an operator must selectively set lock up lever 145a at either lock-up on position 146 serving as a working traveling mode position or lock-up off position 147 serving as a non-working traveling mode position in correspondence to the set state of reverser 7 or gear transmission 33, or an operator must operate reverser lever 154a or sub speed-change lever 160a depending on whether lock up lever 145a is set at lock-up on position 146 or lock-up off position 147. This mode is referred to as a manual selection mode as shown in Fig. 10. Working vehicle transmission system 1 is set in the manual selection mode unless lock up lever 145a is set at automatic control position 148.

In this way, gear transmission 33 includes clutches 55 and 56 to be controlled to speed-change power from prime mover 2 to rear axles 32, and torque converter 4 is interposed between prime mover 2 and gear transmission 33. This transmission system is selectively set between the non-working traveling mode, where the torque change of torque converter 4 and the speed-change of gear transmission 33 are combined to change the speed of the working vehicle, and a working traveling mode, where the speed-change of gear transmission 33 without the torque change of torque converter 4 is used for multistage-change of the working vehicle.

Therefore, especially, the high speed traveling range (the non-working traveling speed range) is covered by the combination of torque converter 4 and gear transmission 33 which is advantageous in operability, traveling stability, working efficiency, power transmission efficiency, and fuel efficiency, in comparison with the speed-change pattern by use of only gear transmission 33 for establishing the whole speed range of the working vehicle.

As mentioned above, in working vehicle transmission system 1 according to the first embodiment, controller 151 controls respective solenoid valves for hydraulic cylinders 59, 60, 111, 112, 113, 114, 152, 158, 164 and 168 serving as actuators for speed-change elements of gear transmission 33, including the clutches and shifters. Therefore, especially, when lock up lever 145a is set at automatic control position 148, controller 151 detects conditions of the actuators and automatically selects either the non-working traveling mode for transmitting the prime mover power to gear transmission 33 through torque converter 4 which is not locked up or the working traveling mode for transmitting the prime mover power to gear transmission 33 through torque converter 4 which is locked up. This automatic selection of either the non-working traveling mode or the working traveling mode can depend on the set speed stage of gear transmission 33, e.g., which speed stage of sub speed-change mechanism 9 is selected among the high speed stage, the low speed stage and the creep speed stage.

As mentioned above, when lock up lever 145a is set at lock up on position 146, or when lock up lever 145a is set at automatic control position 148 and the set speed stage of gear transmission 33 corresponds to the working traveling mode (for example, when sub speed-change lever 160a is set at low speed position 162 or creep position 163), lock up clutch 39 is engaged so as to directly transmit the prime mover power to gear transmission 33 through torque converter 4 which is locked up. In this case, regardless of which speed stage of main speed-change mechanism 8 has been set before starting of the working vehicle, controller 151 automatically selects the first speed gear train (gears 61 and 81) serving as the lowest speed gear train when starting the working vehicle, so that working vehicle transmission system 1 is controlled to ensure a large torque for the start of the working vehicle, thereby ensuring the ability of prime mover 2 for stable starting. Further, since load against the start of the working vehicle is reduced, a volumetrically small clutch package can be used for the speed shift. Alternatively, as far as the required torque for starting the working vehicle is obtained, the second speed gear train (gears 62 and 82) or the third gear train (gears 63 and 83) may be selected as the gear train to be selected for starting the working vehicle when torque converter 4 is locked up.

A distinct feature of working vehicle transmission system 1 according to a first embodiment, as compared to later-discussed working vehicle transmission systems 201 and 401 according to a second embodiment, is that, as mentioned above, main input shaft 3 connected to output shaft 40 of prime mover 2 is connected to PTO clutch 10 without torque converter 4 therethrough. Therefore, regardless of which traveling mode of working vehicle transmission system 1 is set, the prime mover power is transmitted to PTO shaft 14 freely from the function of torque converter 4 so that PTO shaft 14 is rotated rigidly synchronously to the prime mover rotation (the rotation of output shaft 40 of prime mover 2). Therefore, as long as the prime mover rotary speed is constant, the rotary speed of PTO shaft 14 is constant so as to stably drive a working machine connected to PTO shaft 14,

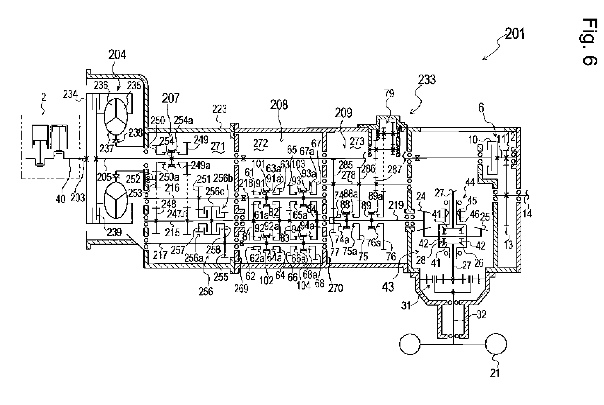

An entire construction of a working vehicle 201 according to a second embodiment will be described with reference to Fig. 6. The significant difference of working vehicle transmission system 201 from working vehicle transmission system 1 according to the first embodiment is that a main input shaft 203 connected to output shaft 40 of prime mover 2 is connected to gear transmission 233 for traveling of the vehicle through a lock-up control torque converter 204, and is also connected to PTO clutch 10 and PTO deceleration gear train 6 for driving PTO shaft 14 through torque converter 204. Hereinafter, components having the same structures as those of the first embodiment are designated by the same reference numerals, and description of these components will be omitted.

Working vehicle transmission system 201 is provided with a transmission casing 233, which incorporates torque converter 204 and gear transmission 233 for transmitting the prime mover power to rear axles 32. Gear transmission 233 includes a reverser/PTO input shaft 205 extended fore-and-aft in transmission casing 223 and connected at a front end thereof to main input shaft 203 through torque converter 204. Main input shaft 203 projects forward from transmission casing 223 so as to be connected to output shaft 40 of prime mover 2. Reverser/PTO input shaft 205 is extended rearward in transmission casing 233 and is connected at a rear end thereof to PTO clutch 10, which is connected to PTO shaft 14 through PTO deceleration gear train 6.

To constitute torque converter 204, main input shaft 203 is fixed at a rear end thereof to a front cover 234, a pump impeller 235 is connected to front cover 234, a turbine liner 236 is connected to reverser/PTO input shaft 205, and a stator 237 is supported by a front wall of transmission casing 223 via an one way clutch 238. A lock up clutch 239 is interposed between front cover 234 and turbine liner 236. A later-discussed lock up control mechanism 280 including lock up clutch 239 changes a state of engagement between main input shaft 203 and reverser/PTO input shaft 205.

In transmission casing 223, gear transmission 233 includes a reverser 207, a main speed-change mechanism 208 and a sub speed-change mechanism 209. Reverser 207, main speed-change mechanism 208 and sub speed-change mechanism 209 are interposed in series in downstream order between main input shaft 203 and a final output shaft (a sub speed-change output shaft) 219 so as to transmit the prime mover power from main input shaft 203 to final output shaft 219. Bevel gear 24 is fixed on a rear end of final output shaft 219 and meshes with bevel bull gear 25 serving as the input gear of differential gear unit 43 provided with differential lock mechanism 44 so as to transmit the rotary power of final output shaft 219 to axles 32 of respective left and right rear wheels 21 via differential gear unit 43 and left and right final deceleration gear units 31.

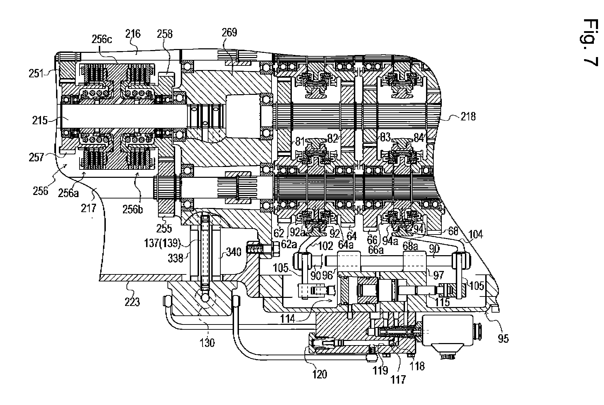

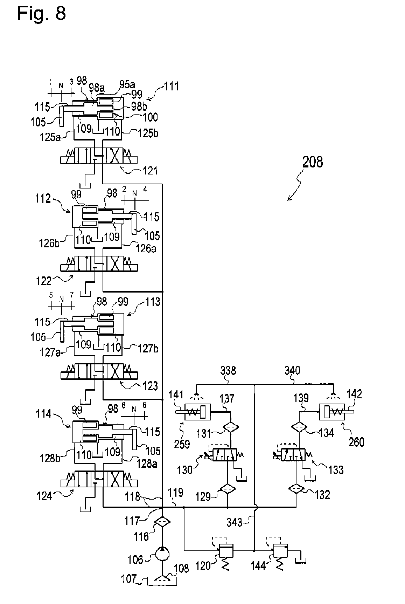

A construction of gear transmission 233 will be described with reference to Figs. 6 to 8. A reverser output shaft (or a main speed-change input shaft) 215, a first main speed-change shaft 216, a second main speed-change shaft 217, and a main speed-change output shaft (or a sub speed-change input shaft) 218 are extended fore-and-aft of the working vehicle in parallel to reverser/PTO input shaft 205 and final output shaft 219, and are journalled in transmission casing 223.

A forward-traveling driving gear 249 and a backward-traveling driving gear 250 are relatively rotatably fitted on reverser/PTO input shaft 205. A forward-traveling driven gear 247 and a backward-traveling driven gear 248 are relatively rotatably fitted on reverser output shaft 215. Forward-traveling driving gear 249 and forward-traveling driven gear 247 directly mesh with each other. Backward-waveling driving gear 250 and backward-traveling driven gear 248 mesh with each other through an idle gear 253 on a fore-and-aft extended counter shaft 252.

A spline hub 254 is fixed on reverser/PTO input shaft 205 between forward-traveling driving gear 249 and backward-traveling driving gear 250, and a shifter 254a is axially slidably and relatively unrotatably fitted on spline hub 254. Portions of driving gears 249 and 250 facing shifter 254a therebetween are formed as respective clutch-toothed portions 249a and 250a. In this way, driving gears 249 and 250 and shifter 254a constitute reverser 207.

By engaging either clutch-toothed portion 249a or 250a with shifter 254a, corresponding driving gear 249 or 250 relatively unrotatably engages with reverser/PTO input shaft 205, thereby allowing a rotary power for either forward-driving or backward-driving (i.e., either a forward-traveling rotary power or a backward-traveling rotary power) to be transmitted to reverser output shaft 215.

Further, reverser output shaft 215 is provided thereon with a main speed-change clutch unit 256. Main speed-change clutch unit 256 includes a common clutch casing (or a drum) 256c, which has back-to-back front and rear chambers and is fixed at an axial center portion thereof on reverser output shaft 215. A hydraulic multi-friction disc type first clutch 256a for setting odd-numbered speed stages of main speed-change mechanism 208 is provided in one of the front and rear chambers of clutch casing 256c, and a hydraulic multi-friction disc type second clutch 256b for setting even-numbered speed stages of main speed-change mechanism 208 is provided in the other of the front and rear chambers of clutch casing 256c, thereby constituting main speed-change clutch unit 256. In comparison with separated first and second clutches 55 and 56 provided on respective first and second main speed-change shafts 16 and 17, main speed-change clutch unit 256 includes first and second clutches 256a and 256b concentrated on reverser output shaft (main speed-change input shaft) 215, so as to be compact and to reduce the number of relevant parts, thereby compacting the speed-change system and reducing costs.

A first clutch output gear 257 is relatively rotatably fitted on reverser output shaft 215 adjacent to first clutch 256a, so as to be able to relatively unrotatably engage with reverser output shaft 215 via engaged first clutch 256a. A hydraulic first clutch control cylinder 259 is provided for operating first clutch 256a. A first main speed input gear 251 is fixed on first main speed-change shaft 216 and constantly meshes with first clutch output gear 257.

Further, a second clutch output gear 258 is relatively rotatably fitted on reverser output shaft 215 adjacent to second clutch 256b, so as to be able to relatively unrotatably engage with reverser output shaft 215 via engaged second clutch 256b. A hydraulic second clutch control cylinder 260 is provided for operating second clutch 256b. A second main speed input gear 255 is fixed on second main speed-change shaft 217 and constantly meshes with second clutch output gear 258.

Therefore, one of first and second clutches 256a and 256b is engaged, and the other is disengaged, so as to transmit either the forward-traveling rotary power or the backward-traveling rotary power to either first or second main speed-change shaft 216 or 217. In this regard, each of clutch control cylinders 259 and 260 is hydraulically controlled so as to gradually change the torque transmitted through corresponding first or second clutch 256a or 256b until the disengaged clutch is completely engaged.

Due to main speed change clutch unit 256 in which first and second clutches 256a and 256b are collected, fluid supply passages to first and second clutches 256a and 256b can be shortened and simplified. In this regard, a fluid passage 343 is branched from the fluid passage between relief valves 120 and 140, and is bifurcated at a position adjacent to main speed change clutch unit 256 into fluid passages 338 and 340 connected to respective clutches 256a and 256b. In this way, working vehicle transmission system 201 is intended to reduce the number of parts and processes for making the fluid supply structure to the main speed clutches, thereby reducing costs and simplifying maintenance.

A front bearing wall 269 and a rear bearing wall 270 are formed in transmission casing 223 so as to divide the inner space of transmission casing 23 into three chambers 271, 272 and 273, i.e., a first chamber 271 in front of front bearing wall 269, a second chamber 272 between front and rear bearing walls 269 and 270, and a third chamber 273 behind rear bearing wall 270. Reverser 207 and main speed clutch unit 256 are disposed in first chamber 271. Main speed change mechanism 208 is disposed in second chamber 272. Sub speed change mechanism 209 is disposed in third chamber 273. The structure of the first to eighth speed gear trains of main speed change mechanism 208 in second chamber 272 and the structure for controlling shifters and clutches for gear shifting among the first to eighth speed gear trains are omitted in the following description because they are the same as those of main speed change mechanism 8.

In sub speed change mechanism 209 in third chamber 273, similar to sub speed change mechanism 9, cylindrical high speed shaft 74 is fixed to a rear end of main speed change output shaft (sub speed change input shaft) 218. Gear 77 is fixed on high speed shaft 74. Final output shaft (sub speed change output shaft) 219 is coaxially fitted at an end portion thereof into high speed shaft 74. Low speed gear 75 and creep gear 76 are relatively rotatably provided on final output shaft 219. Spline hubs 88 and 89 with axially slidable shifters 88a and 89a thereon are fixed on final output shaft 219.

The difference between sub speed change mechanism 209 and sub speed change mechanism 9 is that a sub speed change shaft 278 is journalled in third chamber 273 in parallel to final output shaft 219 and reverser/PTO input shaft 205, that is, non-coaxially to reverser/PTO input shaft 205. A diametrically large gear 285, a diametrically middle gear 286 and a diametrically small gear 287 are fixed on sub speed change shaft 278 so that diametrically large gear 285 meshes with gear 77, diametrically middle gear 286 meshes with low speed gear 75, and diametrically small gear 287 meshes with creep gear 76 through deceleration gear mechanism 79. In this way, sub speed change mechanism 209 includes the high speed drive train, the low speed gear train and the creep gear train. By engaging shifter 88a with clutch-toothed portion 74a of high speed shaft 74, final output shaft 219 is directly connected to main speed change output shaft 218 through high speed shaft 74, thereby establishing the high speed drive train including high speed shaft 74. The low speed gear, including gears 77, 285, 286 and 75, is established by engaging shifter 88a with clutch-toothed portion 75a of low speed gear 75. The creep gear train, including gears 77, 285 and 287, deceleration gear mechanism 79 and creep gear 76, is established by engaging shifter 89a with clutch-toothed portion 76a of creep gear 76.

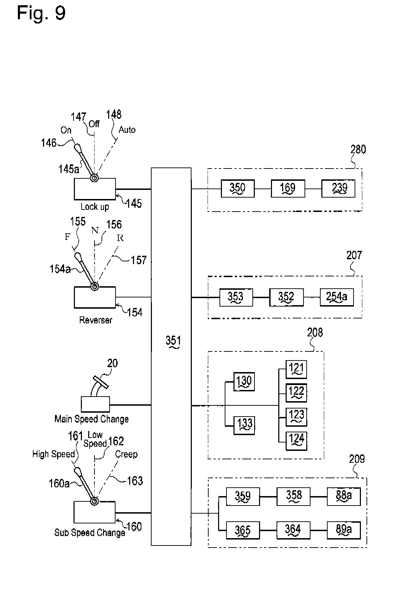

A control structure for gearshift using torque converter 204 and gear transmission 233 will be described with reference to Figs. 6 and 9. Torque converter 204 is provided with a lock up control mechanism 280 including a lock up clutch 239, hydraulic cylinder 169 for operating lock up clutch 239, and a solenoid valve 350 for controlling fluid supply to hydraulic cylinder 169. Solenoid valve 350 is connected to a controller 351. Lock up switch 145 for engaging/disengaging lock up clutch 239 is connected to controller 351, and is provided with lock up lever 145a serving as a lock-up controlling manipulator. By manipulating lock up lever 145a, the fluid supply from solenoid valve 150 to hydraulic cylinder 169 is controlled so as to engage or disengage lock up clutch 239. When lock up lever 145a is set at lock-up on position 146, lock up clutch 239 is tightly fitted to front cover 234 so as to establish the lock-up on state where main input shaft 203 is directly connected (locked) to reverser/PTO input shaft 205 through torque converter 204 which is locked up, i.e., without the function of torque converter 204, When lock up lever 145b is set at lock-up off position 147, lock up clutch 239 is separated from front cover 234 so as to establish the lock-up off state where main input shaft 203 is connected to reverser/PTO input shaft 205 through torque converter 204 which is not locked up, i.e., with the function of torque converter 204. When lock up lever 145a is set at automatic control position 148, lock up clutch 239 is automatically switched between the lock-up on state and the lock-up off state.

Controller 351 is connected to solenoid valves 121, 122, 123, 124, 130 and 133 and accelerator pedal 20, so that controller 351 automatically selects one of the first to eighth speed stages of main speed change mechanism 208 corresponding to the depression of accelerator pedal 20 and the actual vehicle speed. Alternatively, a main speed change manipulator may be provided so as to manually select one of the first to eighth speed stages of main speed change mechanism 208.

In reverser 207, a hydraulic cylinder 352 serving as an actuator for operating shifter 254a is fluidly connected to a solenoid valve 353 controlled by controller 351. Reverser switch 154 is connected to controller 351 and is provided with reverser lever 154a serving as a forward/backward traveling direction selecting manipulator. When reverser lever 154a is set at forward driving position 155, shifter 254a engages with clutch-toothed portion 249a of forward driving gear 249 so as to transmit the forward-driving rotary power to reverser output shaft 215. When reverser lever 154a is set at neutral position 156, shifter 254a is disengaged from both clutch-toothed portion 249a of forward driving gear 249 and clutch-toothed portion 250a of backward driving gear 250 so as to isolate reverser output shaft 215 from the prime mover power. When reverser lever 154a is set at backward driving position 157, shifter 254a engages with clutch-toothed portion 250a of backward driving gear 250 so as to transmit the backward-driving rotary power to reverser output shaft 215.

In sub speed mechanism 209, a hydraulic cylinder 358 serving as an actuator for operating shifter 88a is fluidly connected to a solenoid valve 359 controlled by controller 351. A hydraulic cylinder 364 serving as an actuator for operating shifter 89a is fluidly connected to a solenoid valve 365 controlled by controller 351. Sub speed change switch 160 is connected to controller 351, and is provided with sub speed change lever 160a serving as a sub speed change manipulator. When sub speed change lever 160a is set at high speed position 161, shifter 88a engages with clutch-toothed portion 74a of high speed shaft 74 so as to transmit power from main speed change output shaft 218 to final output shaft 219 through the high speed drive train (i.e., high speed shaft 74). When sub speed change lever 160a is set at low speed position 162, shifter 88a engages with clutch-toothed portion 75a of low speed gear 75 so as to transmit power from main speed change output shaft 218 to final output shaft 219 through the low speed gear train. When sub speed change lever 160a is set at creep position 163, shifter 89a engages with clutch-toothed portion 76a of creep gear 76 so as to transmit power from main speed change output shaft 218 to final output shaft 219 through the creep gear train.

Due to the above construction, while the working vehicle is stationary, reverser lever 154a and sub speed change lever 160a are operated so as to put reverser 207 into either the forward driving state or the backward driving state, and to put sub speed change mechanism 209 into one of the high speed stage, low speed stage and creep speed stage. During traveling of the vehicle, solenoid valves 121, 122, 123, 124, 130 and 133 are controlled according to a vehicle speed signal issued from a vehicle speed sensor (not shown), so as to automatically select one of the first to eighth speeds to correspond to the actual vehicle speed.

When lock up lever 145a is set at lock-up on position 146, torque converter 204 is locked up regardless of the set speed stage of gear transmission 233, i.e., the working traveling mode is established. When lock up lever 145a is set at lock-up off position 147, the torque converter 204 is unlocked up regardless of the set speed stage of gear transmission 233, i.e., the non-working traveling mode is established. When lock up lever 145a is set at automatic control position 148, controller 351 automatically selects whether or not torque converter 204 is locked up, i.e., controller 351 automatically selects either the working traveling mode or the non-working traveling mode.

Additionally, similar to main speed change mechanism 8 of the first embodiment, gears 61 and 81 serving as the first gear train (for setting the lowest speed stage of main speed change mechanism 208) is provided for starting the working vehicle. The first speed gear train is adapted to be selected on starting of the vehicle. Even if the vehicle starts while torque converter 204 is locked up, i.e., even if the vehicle starts in the working traveling mode, the first gear train is used for starting the vehicle, so that the working vehicle can start surely and stably without stopping of prime mover 2. Further, due to the start of the vehicle by use of the first speed gear train, load applied on the starting vehicle is reduced, so that a small clutch package can serve as main speed change clutch unit 256 (especially, first clutch 256a) while ensuring a sufficient durability.

In working vehicle transmission system 201 of the second embodiment, the PTO device (i.e., PTO clutch 10, PTO deceleration gear train 6 and PTO shaft 14) is connected to main input shaft 203 through torque converter 204. Therefore, in the working traveling mode with torque converter 204 which is locked up, the rotation of PTO shaft 14 is rigidly synchronous to the rotation of output shaft 40 of prime mover 2, so that PTO shaft 14 is rotated at a constant speed as long as the rotary speed of prime mover 2 is constant. On the other hand, in the non-working traveling mode with torque converter 204 which is not locked up, the rotary speed of PTO shaft 14 varies due to the variable torque function of torque converter 204. In other words, in the non-working traveling mode of working vehicle transmission system 201, the rotary speed of PTO shaft 14 automatically varies according to the traveling speed of the vehicle. Therefore, the non-working traveling mode is adapted to less intensive activities such as seeding or splaying.

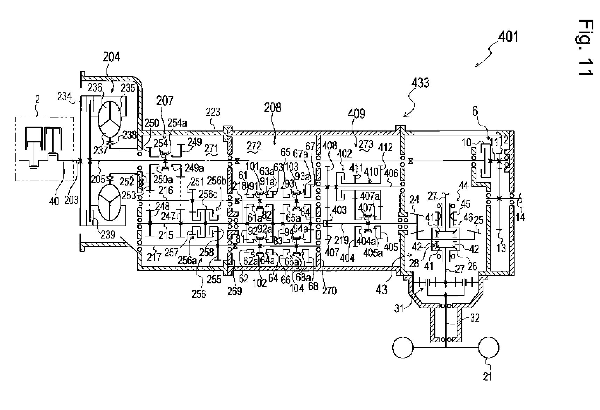

Another working vehicle transmission system 401 belonging to the second embodiment will be described with reference to Fig.11. In a gear transmission 409 of working vehicle transmission system 401, only a sub speed change mechanism 409 is different from sub speed change mechanism 209 of working vehicle transmission system 201. The other parts of working transmission system 401, such as prime mover 2, torque converter 204, reverser 207, main speed change clutch 256, main speed change mechanism 208, PTO clutch 10, PTO deceleration gear train 6 and differential gear unit 43, are constructed similar those of the second embodiment. More specifically, in sub speed change mechanism 409, a multi-friction disc type sub speed change clutch 402 is disposed upstream of the sub speed change gear trains so as to selectively transmit or cut off the main speed changed power from main speed change mechanism 208.

In sub speed change mechanism 409, a sleeve 403 which is opened only at a rear end thereof is fixed at a front end thereof to the rear end of main speed change output shaft 218, and a front end of final output shaft 219 is relatively rotatably supported into shaft 403. A low speed gear 404 and a high speed gear 405 are relatively rotatably fitted on final output shaft 219. Sub speed change shaft 406 is journalled in parallel to final output shaft 219. A gear 408 is fixed on a front portion of sub speed change shaft 406, a gear 407 is fixed on sleeve 403, and gear 408 meshes with gear 407, so as to transmit the output power of main speed change mechanism 208 to sub speed change shaft 406 through gears 407 and 408.

Sub speed change clutch 402 is disposed on a rear portion of sub speed change shaft 406. A cylindrical clutch shaft 410 is relatively rotatably fitted on sub speed change shaft 406 behind sub speed change clutch 402, When sub speed change clutch 402 is engaged, clutch shaft 410 relatively unrotatably engages with sub speed change shaft 406 through engaged sub speed change clutch 402.

Further, a diametrically small gear 411 and a diametrically large gear 412 are fixed on clutch shaft 410. Diametrically small gear 411 meshes with low speed gear 404, and diametrically large gear 412 meshes with high speed gear 405. The speed gear trains of sub speed change mechanism 409 consist of a low speed gear train including gears 411 and 404, and a high speed gear train including gears 412 and 405. A spline hub 407 is fixed on sub speed change output shaft 219 between low speed gear 404 and high speed gear 405. A shifter 407a is axially slidably and relatively unrotatably fitted on spline hub 407. Portions of respective low and high speed gears 404 and 405 facing spline hub 407 therebetween are formed as respective clutch-toothed portions 404a and 405a.

Due to this structure, reverser 207 is set in either the forward driving state or the backward driving state, sub speed change mechanism 409 is set in either the low speed state or the high speed state, and sub speed change clutch 402 is engaged. Then, the brake pedal is released and accelerator pedal 20 is depressed so as to start the working vehicle, whereby the working vehicle can travel in either the working traveling mode or the non-working traveling mode in the same way as those according to the first and second embodiments.

Further, in the present embodiment, to change the speed stage of sub speed change mechanism 409, sub speed change clutch 402 is temporarily disengaged, then the target sub speed stage is established, and an actuator (not shown) is operated so as to gradually change the pressure among the friction discs of sub speed change clutch 402, thereby gradually changing the torque transmitted through the clutch switched from the disengagement state to the engagement state. Therefore, even if the sub speed stage is changed during traveling of the vehicle, the transmission system is prevented from excessive stress caused when either the low speed gear train (gears 411 and 404) or the high speed gear train (gears 412 and 405) is engaged with sub speed output shaft 219.

In this way, in gear transmission 433 serving as the multi-speed transmission, sub speed change mechanism 409 is provided for speed-changing the output power from main speed change mechanism 208, and sub speed change clutch 402 is interposed between sub speed change mechanism 409 and main speed change mechanism 208. Sub speed change clutch 402 is the multi-friction disc type clutch which gradually changes its transmission torque so as to moderate its switching action between the engagement state and the disengagement state. Therefore, during traveling of the vehicle, the sub speed change performance is smoother, and the working vehicle does not have to be stopped for shifting the sub speed stage (for shifting sub speed change lever 160a), thereby improving the efficiency in work and reducing the trouble in operation for driving the vehicle.

Each of the working vehicle transmission systems according to the above-mentioned first and second embodiments is adapted for obtaining the torque change effect of the torque converter when the vehicle travels in the non-working traveling speed range (especially, in a high speed range), Hereinafter, description will be given of working vehicle transmission systems according to third, fourth and fifth embodiments, each of which ensures low and middle speed ranges subjected to speed change of a continuously variable transmission, thereby improving the working efficiency, the power transmission efficiency, and the fuel efficiency.

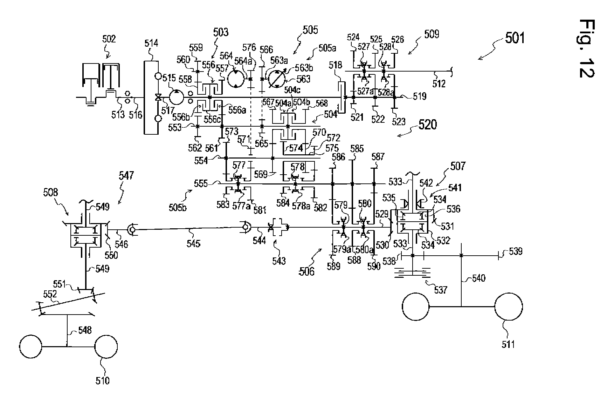

An entire structure of working vehicle transmission system 501 according to the third embodiment will be described with reference to Fig. 12. Working vehicle transmission system 501 is adaptable to four-wheel drive working vehicles such as agricultural tractors, and is provided with a working vehicle transmission system 520 which speed-changes prime mover power from a prime mover 502 such as an engine or an electronic motor. Main input shaft 516 is connected to an output shaft 513 of prime mover 502, and is connected to reverser/PTO input shaft 517 through rotary damper 514. Rotary damper 514 reduces vibration of prime mover 502 transmitted to main input shaft 516, and transmits power to reverser/PTO input shaft 517, i.e., converts the output power of prime mover 502 having unsteady torque into a flat prime mover power.

Reverser/PTO input shaft 517 also serves as a pump shaft of a charge pump 515 for supplying operating fluid into a hydraulic circuit of a later-discussed hydrostatic stepless transmission (hereinafter referred to as a "HST") 505a, and is extended from charge pump 515 opposite to rotary damper 514 so as to be provided on an end thereof with a hydraulic multi-friction disc type PTO clutch 518, and a PTO speed-change mechanism 509 is interposed between PTO clutch 518 and PTO shaft (rear PTO shaft) 512.

In PTO speed-change mechanism 509, a PTO speed-change shaft 519 is coaxially connected to reverser/PTO input shaft 517 through PTO clutch 518. A first working speed driving gear 521, a second working speed driving gear 522 and a third working speed driving gear 523 are fixed on PTO speed-change shaft 519. On the other hand, a first working speed driven gear 524, a second working speed driven gear 525 and a third working speed driven gear 526 are relatively rotatably fitted on PTO shaft 512 disposed in parallel to PTO speed-change shaft 519, and constantly mesh with respective driving gears 521, 522 and 523. In this way, PTO speed-change mechanism 509 includes a first working speed gear train including gear 521 and 524, a second working speed gear train including gears 522 and 525, and a third working speed gear train 523 and 526.

Further, on PTO shaft 512 are fixed a spline hub 527 between first and second working speed driven gears 524 and 525, and a spline hub 528 between second and third working speed driven gears 525 and 526. A shifter 527a is axially slidably and relatively unrotatably fitted on spline hub 527, and a shifter 528a on spline hub 528. Portions of first and second working speed driven gears 524 and 525 facing spline hub 527 therebetween are formed as respective clutch-toothed portions, and a portion of third working speed driven gear 526 facing spline hub 528 is formed as a clutch-toothed portion.

Therefore, by engaging either shifter 527a or 528a with one of the clutch-toothed portions, the corresponding working speed driven gear relatively unrotatably engages with PTO shaft 512 so that the prime mover power is transmitted to PTO shaft 512 through main input shaft 516, rotary damper 514, reverser/PTO input shaft 517, PTO clutch 518 and PTO speed-change mechanism 509. In this way, the power transmission to PTO shaft 512 is switched on or off due to the operation of PTO clutch 518, and the rotary speed of PTO shaft 518 is changed due to the operation of shifter 527a or 528a.

Working vehicle transmission system 501 includes traveling speed-change mechanism 520 in which a reverser 503, a main speed-change mechanism 505 and a sub speed-change mechanism 506 are interposed in series between reverser/PTO shaft 517 and a final output shaft (sub speed-change output shaft) 529. A bevel final pinion 530 is provided on a rear end of final input shaft 529, and meshes with a bull gear 531 serving as an input gear of a differential gear unit 507 differentially connecting left and right yoke shafts 533 to each other. In differential gear unit 507, bull gear 531 is rotatably integral with a differential cage 532. In differential cage 532, differential side gears 534 are fixed on proximal ends of respective left and right differential yoke shafts 533, and each of bevel pinions 535 meshes with both differential side gears 534, so as to constitute a bevel gear mechanism 536.

A multi-disc type brake device 537 is provided on a distal end of each of differential yoke shafts 533. A diametrically small deceleration gear 538 is fixed on each differential yoke shaft 533 between each brake device 537 and differential gear unit 507. Rear wheels 511 are fixed on respective rear axles 540, and diametrically large gears 539 are fixed on respective rear axles 540 and mesh with respective deceleration gears 538, thereby constituting deceleration gear trains. Therefore, the rotation inputted to bull gear 531 through bevel gear 530 is differentially distributed between left and right rear wheels 511 through respective rear axles 540, and rear wheels 511 are able to be braked.

In differential gear unit 507, a differential lock mechanism 541 for locking the differential rotation is provided on one differential yoke shaft 533. In differential locking mechanism 541, a differential lock slider 542 is spline-fitted on a boss portion of differential cage 532. By sliding differential lock slider 542, a differential lock pin (not shown) is engaged into a pin hole provided in the corresponding differential side gear 534 so as to lock this differential side gear 534 with differential cage 532, thereby differentially locking left and right axles 540 to each other, and thereby improving the straight traveling performance and the traveling performance in a muddy place.

A front end of final output shaft 529 is connected to a front wheel drive PTO shaft (mid PTO shaft) 544 through a 2WD/4WD mode switching clutch 543. Front wheel drive PTO shaft 544 is connected to an input shaft 546 of a front transaxle 547 through a propeller shaft 545 and universal joints. Clutch 543 is operatively connected to a drive mode switching lever (not shown) through an appropriate linkage. The drive mode switching lever is adapted to be rotated so as to engage or disengage drive mode switching clutch 543, thereby switching the drive mode between the 2WD mode (driving the rear wheels) and the 4WD mode.

In front transaxle 547, a differential gear unit 508 which is similar to differential gear unit 507 (without the differential lock mechanism) is provided so as to differentially connect left and right front axles 548 to each other. Differential gear unit 508 is configured so as to connect proximal ends of left and right differential yoke shafts 549 to each other. An input gear (bull gear) of differential gear unit 508 meshes with a bevel pinion 550 fixed on input shaft 546, so as to be driven by the output of sub speed-change mechanism 506. The rotations of left and right differential yoke shafts 549 are transmitted to respective left and right front axles 548 through bevel gears 551 fixed on outer ends of respective differential yoke shafts 549 and through kingpin shafts 552 meshing with respective bevel gears 551, thereby driving front wheels 510 fixed on outer ends of respective left and right front axles 548.

As mentioned above, working vehicle transmission system 501 is configured so that the output of traveling speed-change mechanism 520 is transmitted to only the rear wheels or to the front and rear wheels so as to drive the working vehicle while PTO shaft 512 is driven to drive a working device (not shown) drivingly connected to PTO shaft 512 so as to enable various works by the working device.

A structure of traveling speed-change mechanism 520 will be described with reference to Fig. 12. A main speed-change input shaft (reverser output shaft) 553, a first main speed-change shaft 554 and a main speed-change output shaft (sub speed-change input shaft) 555 are extended fore-and-aft of the vehicle in parallel to reverser/PTO input shaft 517 and final output shaft 529. Reverser 503 includes a reverser clutch unit 556 provided on reverser/PTO input shaft 517. Reverse clutch unit 556 includes a common clutch casing (drum) 556c which has an axial center portion fixed on reverser/PTO input shaft 217 and has back-to-back front and rear chambers. A multi-friction disc type forward-traveling clutch 556a is disposed in one of the front and rear chambers, and a multi-friction disc type backward-traveling clutch 556b is disposed in the other of the front and rear chambers. Due to such a compact reverser clutch unit 556 containing forward-traveling clutch 556a and backward-traveling clutch 556b therein, a space for the forward-traveling clutch and the backward-traveling clutch is reduced so as to minimize working vehicle transmission system 501, and to share the common part between the forward-traveling clutch and the backward-traveling clutch, thereby reducing costs.

A forward-traveling driving gear 557 is relatively rotatably provided on reverser/PTO input shaft 517 adjacent to forward-traveling clutch 556a. When forward-traveling clutch 556a is engaged, forward-traveling driving gear 557 is relatively unrotatably engaged with reverser/PTO input shaft 517 through forward-traveling clutch 556a. A backward-traveling driving gear 558 is relatively rotatably provided on reverser/PTO input shaft 517 adjacent to backward-traveling clutch 556b. When backward-traveling clutch 556b is engaged, backward-traveling driving gear 558 is relatively unrotatably engaged with reverser/PTO input shaft 517 through backward-traveling clutch 556b.

A forward-traveling driven gear 561 and backward-traveling driven gear 562 are fixed on main speed-change input shaft 553. Forward-traveling driven gear 561 constantly directly meshes with forward-traveling driving gear 557 so as to constitute a forward-traveling gear train. Backward-traveling driven gear 562 constantly meshes with backward-traveling driving gear 558 through an idle gear 559 on an idle gear shaft 560 so as to constitute a backward-traveling gear train. Therefore, forward-traveling clutch 556a and backward-traveling clutch 556b are engaged or disengaged so that the prime mover power inputted from main input shaft 516 to reverser/PTO input shaft 517 through rotary damper 514 is selectively converted into either the forward-traveling rotary power or the backward-traveling rotary power to be transmitted to main speed-change input shaft 553.

Main speed-change mechanism 505 is constructed by combining an HST 505a serving as a continuously variable transmission and a gear transmission 505b serving as a multistage transmission. In HST 505a, a variable displacement hydraulic pump 563 and a fixed displacement hydraulic motor 564 are fluidly connected to each other through a hydraulic circuit. By changing the tilt angle of a movable swash plate 563a of hydraulic pump 563, the amount of delivery fluid from hydraulic pump 563 to hydraulic motor 564 is changed so as to change the speed of rotation power of hydraulic motor 564 to be outputted to a motor shaft 564a without steps. Incidentally, since the direction of rotation power is switched due to reverser 503 upstream of main speed-change mechanism 505, movable swash plate 563b is tiltable in only one direction from its neutral position, so that the direction of rotation of motor shaft 564a relative to a pump shaft 563a is unchangeable. A pump driving gear 565 is fixed on main speed-change input shaft 553, and constantly meshes with a pump input gear 566 fixed on pump shaft 563a of hydraulic pump 563, so that either the forward-traveling rotary power or the backward-traveling rotary power inputted to main speed-change input shaft 553 is constantly inputted to hydraulic pump 563 as long as prime mover 2 is rotated,

Gear transmission 505b includes a main speed clutch unit 504 provided on main speed-change input shaft 553. Main speed-change clutch unit 504 includes a common clutch casing (drum) 504c which has an axial center portion fixed on main speed-change input shaft 553 and has back-to-back front and rear chambers. A multi-friction disc type forward-traveling clutch 504a is disposed in one of the front and rear chambers, and a multi-friction disc type backward-traveling clutch 504b is disposed in the other of the front and rear chambers. A first clutch output gear 567 is relatively rotatably provided on main speed-change input shaft 553 adjacent to first clutch 504a. When first clutch 504a is engaged, first clutch output gear 567 is relatively unrotatably engaged with main speed-change input shaft 553 through first clutch 504a. A second clutch output gear 568 is relatively rotatably provided on main speed-change input shaft 553 adjacent to second clutch 504b. When second clutch 504b is engaged, second clutch output gear 568 is relatively unrotatably engaged with main speed-change input shaft 553 through second clutch 504b. First and second clutches 504a and 504b gradually change their respective torques in a later-discussed way during the switching operation therebetween.

A third speed driving gear 573 and a first main speed-change gear 569 are fixed on first main speed-change shaft 554. A first speed driving gear 571 is relatively rotatably provided on first main speed-change shaft 554 between third speed driving gear 573 and first main speed-change gear 569. A cylindrical second main speed-change shaft 575 is relatively rotatably fitted on first main speed-change shaft 554. A fourth speed driving gear 574, a second main speed-change gear 570 and a second speed driving gear 572 are fixed on second main speed-change shaft 575. First main speed-change gear 569 constantly meshes with first clutch output gear 567. Second main speed-change gear 570 constantly meshes with second clutch output gear 568. Due to this structure, first clutch 504a and second clutch 504b are engaged or disengaged so as to transmit the forward-traveling or backward-traveling rotary power from main speed-change input shaft 553 to corresponding first or second main speed-change shaft 554 or 554.

A third speed driven gear 583, a first speed driven gear 581, a fourth speed driven gear 584 and a second speed driven gear 582 are relatively rotatably fitted on main speed-change output shaft 555, and constantly mesh with third speed driving gear 573, first speed driving gear 571, fourth speed driving gear 574 and second speed driving gear 572, respectively, thereby constituting speed gear trains of gear transmission 505b, i.e., a first speed gear train including gears 571 and 581, a second speed gear train including gears 572 and 582, a third speed gear train including gears 573 and 583, and a fourth speed gear train including gears 574 and 584. First speed driving gear 571 meshes with a motor output gear 576 fixed on motor shaft 564a of hydraulic motor 564 so as to interlock gears 571 and 581 of the first gear train to hydraulic motor 564.

On main speed-change output shaft 555 are fixed a spline hub 577 between third speed driven gear 583 and first speed driven gear 581, and a spline hub 578 between fourth speed driven gear 584 and second speed driven gear 581. Shifters 577a and 578a are axially slidably and relatively unrotatably fitted on respective spline hubs 577 and 578. Portions of first and third speed driven gears 581 and 583 facing spline hub 577 therebetween are formed as respective clutch-toothed portions, and portions of second and fourth speed driven gears 582 and 584 facing spline hub 578 therebetween are formed as respective clutch-toothed portions.

By engaging shifter 577a with either fist or third speed driven gear 581 or 583, one gear train to be activated is selected between the odd-numbered speed gear trains, i.e., between the first speed gear train including driven gear 581 and the third speed gear train including driven gear 583. On the other hand, by engaging shifter 578a with either second or fourth speed driven gear 582 or 584, one gear train to be activated is selected between the even-numbered speed gear trains, i.e., between the second speed gear train including driven gear 582 and the fourth speed gear train including driven gear 584.

In this way, by engaging shifter 577a or 578a with one of the clutch-toothed portions, the corresponding driven gear is relatively rotatably engaged with main speed-change output shaft 555. When one of the second, third or fourth speed stages of main speed-change mechanism 505 occurs, the prime mover power is transmitted from reverser 503 to main speed-change output shaft 555 through main speed-change clutch unit 504 in gear transmission 505b and through first or second main speed-change shaft 554 or 575. Among the second, third and fourth speed stages, the speed-change is stepped. With respect to the first speed stage of main speed-change mechanism 505, the prime mover power is transmitted from reverser 503 to main speed-change output shaft 555 through HST 505a and through the first gear train mechanism 505 (gears 571 and 581), The forward-traveling or backward-traveling rotary power inputted from reverser 503 to hydraulic pump 563 of HST 505a becomes a hydraulic torque to be transmitted to hydraulic motor 564. By operating movable swash plate 563b, the speed of rotation of hydraulic motor 564 to be transmitted to the first speed gear train of gear transmission 505b is changed without steps. In other words, as long as the first speed gear train is selected to be activated, main speed-change output shaft 555 is speed-changed without steps by operating movable swash plate 563b of hydraulic pump 563.

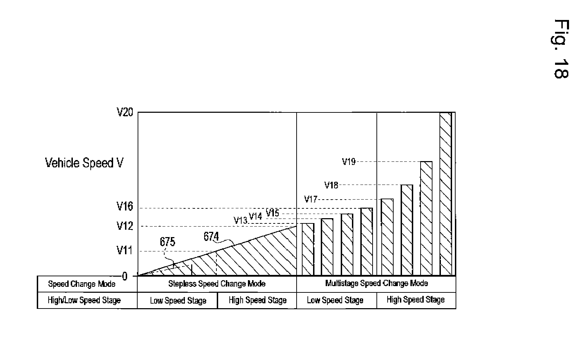

As detailed later, Fig. 18 describes the relationship between the actual traveling speed (i.e., vehicle speed) V and the selected mode and speed stage of main speed-change mechanism 505. A threshold of vehicle speed V for selecting the activated gear train of gear transmission 505b between the first speed gear train and the second speed gear train is set as a speed-change mode switching vehicle speed (V12). When vehicle speed V is not more than the speed-change mode switching vehicle speed, gear transmission 505b is set at the first speed stage, and movable swash plate 563b of hydraulic pump 563 is automatically operated according to variation of vehicle speed V based on the rotary speed-change of prime mover 2 by depression of an accelerator pedal (not shown) or the like, so as to increase the rotary speed ratio of motor shaft 564a to pump shaft 563a, i.e., the speed ratio of HST 505a, thereby changing vehicle speed V without steps. This state of main speed-change mechanism 505, where gear transmission 505a is set at the first speed stage and the stepless (continuous) speed-change of HST 505a is enabled, is referred to as a continuous speed-change mode. On the other hand, when vehicle speed V is higher than the speed-change mode switching vehicle speed, the multistage speed-change of gear transmission 505b is performed among the second, third and fourth speed stages (other than the first speed stage) as mentioned above, while HST 505a having pump shaft 563 interlocking with the first speed gear train is prevented from being driven. This state of main speed-change mechanism 505 is referred to as a multistage speed-change mode.

In sub speed-change mechanism 506, on main speed-change output shaft (sub speed-change input shaft) 555 are fixed a diametrically middle gear 586, a diametrically large gear 585 and a diametrically small gear 587. On the other hand, on final output shaft (sub speed-change output shaft) 529 are relatively rotatably fitted a low speed gear 589, a high speed gear 588 and a creep gear 590. Low speed gear 589 constantly meshes with diametrically middle gear 586, high speed gear 588 with diametrically large gear 585, and creep gear 590 with diametrically small gear 587. In this way, the speed gear trains of sub speed-change mechanism 506 consist of a low speed gear train including diametrically middle gear 586 and low speed gear 589, a high speed gear train including diametrically large gear 585 and high speed gear 588, and a creep gear train including diametrically small gear 587 and creep gear 590.

Further, on sub speed-change output shaft 529 are fixed a spline hub 579 between low speed gear 589 and high speed gear 588, and a spline hub 580 between high speed gear 588 and creep gear 590. A shifter 579a is axially slidably and relatively unrotatably fitted on spline hub 579, and shifter 580a on spline hub 580. A portion of low speed gear 589 facing spline hub 579 is formed as a clutch-toothed portion, and portions of high speed gear 588 and creep gear 590 facing spline hub 580 therebetween are formed as respective clutch-toothed portions.

By engaging shifter 579a or 580a with one of the clutch-toothed portions, the corresponding gear, i.e., low speed gear 589, high speed gear 588 or creep gear 590, relatively unrotatably engages with final output shaft 529. In this way, the output power of main speed-change mechanism 505 is transmitted to final output shaft 529 through the selected gear train of sub speed-change mechanism 509, and the output power of final output shaft 529 is transmitted to rear wheels 511 (and front wheels 510) as mentioned above.

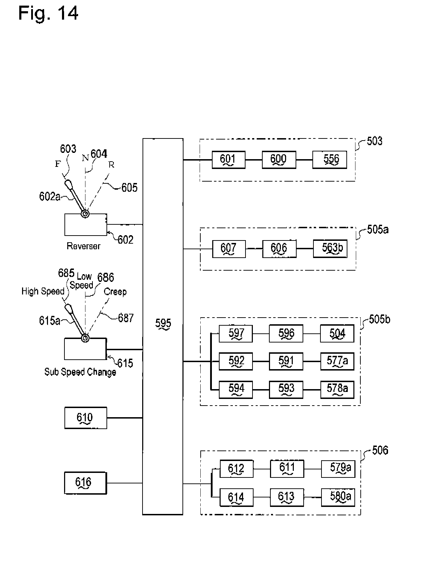

A structure of controlling the speed-change of traveling speed-change mechanism 520 will be described with reference to Figs. 12 and 14. In reverser 503, a hydraulic cylinder 600 serving as an actuator for operating reverser clutch unit 556 is fluidly connected to a proportional solenoid valve 601 controlled by a controller 595. A reverser switch 602 is connected to controller 595, and is provided with a reverser lever 602a serving as a manipulator for switching reverser switch 602. When reverser switch 602a is set at a forward traveling position 603, forward-traveling clutch 556a is engaged and backward-traveling clutch 556b is disengaged, thereby outputting a forward-traveling rotary power from reverser/PTO input shaft 517 to main speed-change input shaft 553 (i.e., establishing a forward-traveling stage of reverser 503). When reverser lever 602a is set at a neutral position 604, both of forward-traveling and backward-traveling clutches 556a and 556b are disengaged so as to isolate main speed-change input shaft 553 from the rotation of reverser/PTO input shaft 517 (i.e., to establish a neutral stage of reverser 503). When reverser switch 602a is set at a backward traveling position 605, fonvard-traveling clutch 556a is disengaged and backward-traveling clutch 556b is engaged, thereby outputting a backward-traveling rotary power from reverser/PTO input shaft 517 to main speed-change input shaft 553 (i.e., establishing a backward-traveling stage of reverser 503).

With respect to HST 505a serving as the continuously variable transmission of main speed-change mechanism 505, a hydraulic cylinder 606 serving as an actuator for operating movable swash plate 563b of hydraulic pump 563 is fluidly connected to a proportional solenoid valve 607 controlled by controller 595. As mentioned above, when gear transmission 505b is set at the first speed stage, prime mover 2 is started and accelerated by operating accelerator pedal 20 or the like, the tilt angle of movable swash plate 563a is changed based on the detection signal from a vehicle sensor 610 for detecting an actual traveling speed of the vehicle, so as to increase the rotary speed ratio of motor shaft 564a to pump shaft 563a, i.e., the speed ratio of HST 505a, thereby automatically changing the speed ratio without steps in correspondence to the traveling speed until the vehicle speed reaches the speed-change mode switching vehicle speed.

With regard to gear transmission 505b serving as the multistage transmission of main speed-change mechanism 505, hydraulic cylinders 591 and 593 serving as actuators for controlling the slides of respective shifters 577a and 578a are fluidly connected to respective changeover solenoid valves 592 and 594 controlled by controller 595. Controller 595 issues a speed-change command signal to either or both of changeover solenoid valves 592 and 594 in correspondence to the vehicle speed detection signal from vehicle speed sensor 610, so as to activate one or both of hydraulic cylinders 591 and 593, thereby sliding corresponding one or both of shifters 577a and 578a so as to select a gear train to be activated. When controller 595 judges that the actual vehicle speed measured by the detection signal from vehicle speed sensor 610 is not more than the speed-change mode switching vehicle speed establishes the first speed stage of gear transmission 505b, gear transmission 505b is set and held at the first speed stage (in the stepless speed-change mode). When the vehicle speed increases and exceeds the speed-change mode switching vehicle speed, the speed stage of gear transmission 505b is shifted from the first speed stage to the second speed stage, and the speed stage of gear transmission 505b is automatically shifted among the second, third and fourth speed stages in correspondence to the vehicle speed as long as the vehicle speed varies in a speed range higher than the speed-change mode switching vehicle speed (in the multistage speed-change mode).

A hydraulic cylinder 596 serving as an actuator for operating main speed-change clutch unit 504 including first and second clutches 504a and 504b is fluidly connected to a solenoid valve 597 controlled by controller 595. By a command signal from controller 595, hydraulic cylinder 596 gradually operates clutches 504a and 504b. For example, when the clutches are multi-friction disc type clutches as those of this embodiment, hydraulic cylinder 596 gradually changes pressure among friction discs of the clutches so as to gradually change the torque transmitted through the clutches switched between the disengagement stage and the engagement stage, thereby increasing the smoothness of the speed-change of gear transmission 505b.

With respect to sub speed-change mechanism 506, a hydraulic cylinder 611 serving as an actuator for sliding shifter 579a is fluidly connected to a changeover solenoid valve 612 controlled by controller 595, and a hydraulic cylinder 613 serving as an actuator for sliding shifter 580a is fluidly connected to a changeover solenoid valve 614 controlled by controller 595. A sub speed-change lever 615a is connected to controller 595 and is provided with a sub speed-change lever 615a serving as a manipulator for switching sub speed-change switch 615. When sub speed-change lever 615a is set at a low speed position 686, shifter 579a engages with the clutch-toothed portion of low speed gear 589, so as to transmit power from main speed-change output shaft 555 to final output shaft 529 through the low speed gear train (gears 586 and 589), i.e., to establish the low speed stage of sub speed-change mechanism 506. When sub speed-change lever 615a is set at a high speed position 685, shifter 580a engages with the clutch-toothed portion of high speed gear 588, so as to transmit power from main speed-change output shaft 555 to final output shaft 529 through the high speed gear train (gears 585 and 588), i.e., to establish the high speed stage of sub speed-change mechanism 506. When sub speed-change lever 615a is set at a creep position 687, shifter 580a engages with the clutch-toothed portion of creep gear 590, so as to transmit power from main speed-change output shaft 555 to final output shaft 529 through the creep gear train (gears 587 and 590), i.e., to establish the creep stage of sub speed-change mechanism 506.

Due to the above-mentioned structure, while the working vehicle is stationary, reverser lever 602 is set at forward traveling position 603 or backward traveling position 605, sub speed-change lever 615a is set at low speed position 686, and then the working vehicle is operated to start (for example, accelerator pedal 20 is depressed). Accordingly, shifter 577a engages with the clutch-toothed portion of first speed driven gear 581 so as to engage the first speed gear train (gears 571 and 581) with main speed-change output shaft 555, thereby establishing the first speed stage of gear transmission 505b. As mentioned above, the first speed gear train interlocks with motor shaft 564a of hydraulic motor 564. Main speed-change mechanism 505 is set in the stepless speed-change mode before the increased vehicle speed exceeds the speed-change mode switching vehicle speed. In other words, while the vehicle speed increases from zero to the speed-change mode switching vehicle speed, the first speed stage of gear transmission 505b is held and HST 505a steplessly speed-changes the output power of reverser 503. When the vehicle speed further increases and exceeds the speed-change mode switching vehicle speed, shifter 577a in gear transmission 505b is separated from the clutch-toothed portion of first speed driven gear 581 so as to disengage the first speed gear train (gears 571 and 581) from main speed-change output shaft 555, and the speed stage is automatically smoothly shifted from the second speed stage to the third speed stage, and from the third speed stage to the fourth speed stage, so as to establish a speed ratio corresponding to the vehicle speed as mentioned above, thereby setting main speed-change mechanism 505 in the multistage speed-change mode.

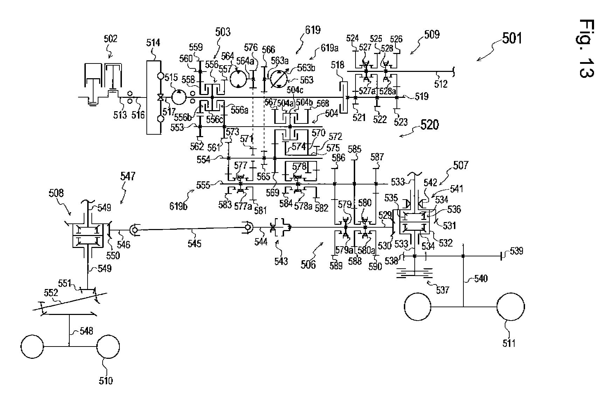

Incidentally, according to the third embodiment, in either working vehicle transmission system 501 shown in Fig, 12 or modified working vehicle transmission system 501 shown in Fig. 13, collar-shaped shifters with no synchromesh mechanism are used for gearshift of sub speed-change mechanism 506, and no clutch is interposed between main speed-change mechanism 505 and sub speed-change mechanism 506. Thus, sub speed-change mechanism 506 must not be operated for gearshift during traveling of the vehicle. In other words, sub speed-change lever 615a must be operated while the working vehicle is stationary. However, with respect to working vehicle transmission system 501 shown in Fig. 13, a hydraulic multi-friction disc type clutch as mentioned above can be used for gearshift of sub speed-change mechanism 506 so as to enable the sub speed-change operation (operation of sub speed-change lever 615a) during traveling of the vehicle. Alternatively, as mentioned later about fourth and fifth embodiments, sub speed-change mechanism 506 may be enabled to automatically speed-change, thereby enabling automatic continuous speed-change corresponding to variation of the vehicle speed from the low speed range to the high speed range.

The multistage speed-change of gear transmission 505b based on control of first and second clutches 504a and 504b will be described with reference to the representative speed-change from a forward-traveling second high speed to a forward-traveling third high speed. The forward-traveling second high speed is defined as a speed stage where reverser 503 is set at the forward traveling stage, gear transmission 505b of main speed-change mechanism 505 is set at the second speed stage, and sub speed-change mechanism 506 is set at the high speed stage. The forward-traveling third high speed is defined as a speed stage where reverser 503 is set at the forward traveling stage, gear transmission 505b of main speed-change mechanism 505 is set at the third speed stage, and sub speed-change mechanism 506 is set at the high speed stage. Therefore, the speed-change from the forward-traveling second high speed to the forward-traveling third high speed means that gear transmission 505b of main speed-change mechanism 505 is switched from the second speed stage to the third speed stage while keeping the states of reverser 503 and sub speed-change mechanism 506. Here, the forward-traveling second high speed is referred to "forward second speed", and the forward-traveling third high speed is referred to "forward third speed"

When vehicle speed V exceeds speed-change mode switching vehicle speed V12 and the multistage speed-change mode is established, during traveling of the working vehicle at the forward second speed, second clutch 504b is engaged, and shifter 527a engages with second speed driven gear 582 so as to drivingly connect main speed-change output shaft 555 to main speed-change input shaft 553 through the second speed gear train (gears 572 and 582). Accordingly, the forward-traveling rotary power from reverser 503 is transmitted to second main speed-change shaft 575 through main speed-change input shaft 553, second clutch 504b, second clutch output gear 568 and second main speed-change gear 570 in this order, and the power is transmitted through the second speed gear train (gears 572 and 582) to main speed-change output shaft 555 so as to become a forward second speed rotary power, and the forward second speed rotary power is transmitted from main speed-change output shaft 555 to sub speed-change mechanism 506. Meanwhile, first clutch 504a is disengaged.

When the vehicle speed is further increased, controller 595 issues a command signal for speed-changing from the forward second speed to the forward third speed based on a vehicle speed signal from vehicle sensor 610. Therefore, third gear train (gears 573 and 583) connected first clutch 504a is engaged with main speed-change output shaft 555 while keeping the engagement state of second clutch 504b, the engagement state of the second speed gear train (gears 572 and 582) with main speed-change output shaft 555, and the disengagement state of first clutch 504a. In this regard, changeover solenoid valve 592 is switched to operate hydraulic cylinder 591 so that shifter 577a slides and engages with the clutch-toothed portion of third speed driven gear 583, thereby drivingly connecting main speed-change output shaft 555 to first main speed-change shaft 554 through the third speed gear train (gears 573 and 583). However, first clutch 504a drivingly connected to first main speed-change shaft 554 is still kept disengaged so as to prevent the transmission system from excessive stress caused by the engagement of the third speed gear train (gears 573 and 583) to main speed-change output shaft 555.

When a considerable time passes since the issuance of the speed-change command signal, controller 595 issues a clutch switching command signal so that second clutch 504b is gradually disengaged and first clutch 504a is gradually engaged. Accordingly, proportional solenoid valve 597 connected to controller 595 is proportionally shifted for decompression, so as to operate hydraulic cylinder 596 fluidly connected to proportional solenoid valve 597, so that disengaged first clutch 504a is engaged while engaged second clutch 504b is disengaged.

When the issuance of the clutch switching command signal continues and reaches a certain timing, second clutch 504b is completely disengaged, and first clutch 504a is completely engaged. In other words, while the clutch switching command signal is issued, both of the second speed gear train (gears 572 and 582) and the third speed gear train (gears 573 and 583) engage with main speed-change output shaft 555, so that the forward-traveling rotary power from second main speed-change shaft 575 drivingly connected with second clutch 504b to the second speed gear train (gears 572 and 582) is gradually reduced, while the forward-traveling rotary power from first main speed-change shaft 554 drivingly connected with first clutch 504a to the third speed gear train (gears 573 and 583) is gradually increased. In this way, the power transmission from main speed-change input shaft 553 to main speed-change output shaft 555 is gradually transferred from second main speed-change shaft 575 and gears 572 and 582 of the second gear train to first main speed-change shaft 554 and gears 573 and 583 of the third gear train. In other words, the speed stage of traveling speed-change mechanism 520 is turned from the forward second speed to the forward third speed. Finally, power is transmitted only through first main speed-change shaft 554 and gears 573 and 583 of the third speed gear train. During all processes of this speed-change, the forward-traveling rotary power reverser 503 is not interrupted.

When a considerable time further passes, controller 595 issues a speed-change finishing signal so that the second speed gear train (gears 572 and 582) drivingly connected to second clutch 504b is disengaged from main speed-change output shaft 555 while keeping the engagement state of first clutch 504a, the engagement state of the third speed gear train (gears 573 and 583) drivingly connected with first clutch 504a to main speed-change output shaft 555, and the disengagement state of second clutch 504b. In this regard, changeover solenoid valve 594 is switched to operate hydraulic cylinder 593 so that shifter 578a slides to be separated from the clutch-toothed portion of second speed driven gear 582, thereby cutting off the driving connection of main speed-change output shaft 555 to second main speed-change shaft 575, thereby completing the gearshift from the forward second speed to the forward third speed. However, second clutch 504b drivingly connected to second main speed-change shaft 575 is still kept disengaged so as to cut off the transmission of the forward-traveling rotary power to second main speed-change shaft 575 prevent the transmission system from excessive stress caused by the disengagement of the second speed gear train (gears 572 and 582) from main speed-change output shaft 555.

All the other gearshifts between speed stages, except for the gearshift between the first speed stage and the second speed state, are performed in processes similar to the above-mentioned processes. Namely, multistage gear transmission 505b serving as a multistage speed-change mechanism includes main speed-change clutch 504 having first clutch 504a for the odd-numbered speed drive train, i.e., gears 573 and 583 of the third speed gear train, and second clutch 504b for the even-numbered speed drive train, i.e., gears 572 and 582 of the second speed gear train. While both of the odd-numbered speed drive train and the even-numbered speed drive train are selected to be activated, the engagement action of one of first or second clutch 504a or 504b overlaps the disengagement action of the other first or second clutch 504a or 504b, so as to ensure power transmission from prime mover 502 to front and rear axles 540 and 548 without interruption, thereby optimizing operability and stability of the vehicle during traveling in comparison with a vehicle equipped with a conventional multistage transmission.

With regard to the speed-change between the first speed stage and the second speed stage, instead of first clutch 504a, movable swash plate 563b of hydraulic pump 563 is operated so as to transmit power to the first speed gear train (gears 571 and 581) or to interrupt the power transmission. More specifically, shifter 577a is engaged or disengaged to and from first speed driven gear 581 while the tilt angle of movable swash plate 563b is zeroed, i.e., movable swash plate 563b is set at the neutral position so as to interrupt the power transmission to the first speed gear train (gears 571 and 581). Therefore, the transmission system is prevented from experiencing excessive stress caused by the engagement of the first speed gear train (gears 571 and 581) from main speed-change output shaft 555, thereby ensuring a continuous speed-change similar to the above-mentioned.

As mentioned above, working vehicle transmission 501 includes gear transmission 505b serving as a multistage transmission interposed between prime mover 502 and axles 548 and 540. Working vehicle transmission 501 is selectively set in either the multistage speed-change mode or the stepless speed-change mode. In the multistage speed-change mode, gear transmission 505b is speed-changed among plural speed stages so as to change stepwise the output rotary speed to axles 548 and 540. In the stepless speed-change mode, the speed ratio of HST 505a is changed so as to change the output rotary speed to axles 548 and 540 without steps. The switching between the multistage speed-change mode and the stepless speed-change mode depends on whether or not the activated speed stage of gear transmission 505b is the first speed stage. Controller 595 automatically select one of the speed stages of gear transmission 505b in correspondence to vehicle speed V.

In working vehicle transmission system 501 of this embodiment, the stepless speed-change mode which is established in the low speed range (or the low and middle speed ranges) may serve as the working traveling mode. In this mode, due to the stepless speed-change by the hydraulic power transmission, the vehicle speed can be optimized accurately in correspondence to conditions such as work contents or load on prime mover 502, thereby improving the efficiencies of the vehicle in work and power transmission. Further, the vehicle can start, speed-change and stop very smoothly so as to ensure sufficient operability and stability in traveling. On the other hand, the multistage speed-change mode set in the middle and high vehicle speed ranges may serve as the non-working traveling mode. For example, the working vehicle does not require minute speed-change operation when the working vehicle moves from a working field to a storehouse. In such a case, the non-working traveling mode is established so as to enable the vehicle to travel at a certain speed stage with the high efficiency of the mechanical power transmission, thereby ensuring sufficient efficiencies in power transmission and fuel consumption for the high speed traveling, similar to those in the working traveling mode, low speed traveling. Further, since HST 505a does not have to cover the whole of vehicle speed range, HST 505a does not have to be increased in capacity or number. Therefore, the transmission system is advantageous in compactness, in reduction of parts and costs, and in simplicity in maintenance in comparison with that with only HST 505a covering the whole of vehicle speed range.

Further, in the stepless speed-change mode, HST 505a serving as the continuously variable transmission speed-changes the vehicle speed without steps while gear transmission 505b serving as the multistage transmission is set at the first speed stage that is the lowest speed stage. Thus, the vehicle speed of the first speed stage used for starting and stopping of the vehicle is changed without steps so as to ensure smooth start of the vehicle and to accurately stop the vehicle at a target position, and to improve the efficiency in work.

The working vehicle such as a tractor equipped with a ridge-making device or a rotary cultivator for deeply cultivating for planting vegetables has to creep, i.e., travel at a very low speed such as 0.5-0.8 km/h. In this third embodiment, the creep stage of sub speed-change mechanism 506 is defined as a very low speed range within the low speed range corresponding to the stepless speed-change mode, thereby ensuring very smooth creep of the vehicle with sufficient operability and stability in traveling.

Further, to detect load on prime mover 502, a load torque sensor 616 is provided to main input shaft 516 connected to prime mover 502, for instance. Load torque sensor 616 is connected to controller 595 so that controller 505 changes the vehicle speed in correspondence to load on prime mover 502. For example, controller 505 controls a governor connected to controller 595 so as to change the vehicle speed in correspondence load on prime mover 502. Hereinafter, this control mode is referred to as "load control mode".

In this way, the transmission system can be set in the load control mode for changing the vehicle speed in correspondence to the load regardless of what is the speed-change mode. Therefore, even if prime mover 502 is overloaded via the front and rear wheels 510 and 511 or via the working device, the vehicle speed can be optimized immediately corresponding to the load on prime mover 502, thereby preventing prime mover 502 from stopping, and thereby maintaining the appropriate rotary speed of prime mover 502 for any of various kinds of traveling of the vehicle, so as to ensure high traveling stability and high working efficiency.

Another working vehicle transmission system 501 according to the third embodiment will be described with reference to Fig. 13. Description of the same members as those in the embodiment of Fig. 12, which are designated by the same reference numerals, is omitted. In this case, a main speed-change mechanism 619 of working vehicle transmission system 501 includes an HST 619a serving as a continuously variable transmission and a gear transmission 619b serving as a multistage transmission. In gear transmission 619b, pump driving gear 565 for transmitting power to pump shaft 563a of hydraulic pump 563 is provided not on main speed-change input shaft 553 but on first main speed-change shaft 554, so that pump driving gear 565 meshes with pump input gear 566 fixed on pump shaft 563a of hydraulic pump 563 of HST 619a.

Therefore, unless reverser clutch 556 is neutral (i.e., unless reverser lever 602a is set at neutral position 604), main speed-change input shaft 553 is constantly rotated as long as prime mover 2 rotates. In this regard, in main speed-change mechanism 505 shown in Fig. 12, gear 566 fixed on pump shaft 563a of hydraulic pump 563 meshes with gear 565 fixed on main speed-change input shaft 553 so as to drive hydraulic pump 563, so that the prime mover power is constantly used for driving HST 505a even when gear transmission 505b is set to activate any of the speed gear trains other than the first speed gear train (gears 571 and 581), thereby leading to waste of the prime mover power.

On the contrary, in main speed-change mechanism 619 shown in Fig. 13, as mentioned above, pump shaft 563a is drivingly connected to first main speed-change shaft 554 which is drivingly connected to main speed-change input shaft 553 only when first clutch 504a is engaged. More specifically, on the assumption that the case where gear transmission 619b is set to activate the first speed gear train (gears 571 and 581) is left out of consideration, first main speed-change shaft 554 is driven only when first clutch 504a is engaged, that is, when the third speed gear train (gears 573 and 583) is selected to be activated or during a speed-shift of main speed-change mechanism 619 from or to the third speed stage. First main speed-change shaft 554 is not driven when second clutch 504b is engaged to drive second main speed-change shaft 575, i.e., when the second speed gear train (gears 572 and 582) or the fourth speed gear train (gears 574 and 584) are set to be activated, because first main speed-change shaft 554 is not driven. Therefore, energy is not wasted to drive hydraulic pump 563 unnecessarily, which in turn prevents unwanted waste of the prime mover power.

An entire construction of a working vehicle transmission system 621 according to a fourth embodiment will be described. The only difference between working vehicle transmission system 621 and the third embodiment is a main speed-change mechanism 623 in traveling speed-change mechanism 622. The other elements, e.g., prime mover 502, rotary damper 514, reverser 503, PTO speed-change mechanism 509, sub speed-change mechanism 506 and front and rear differential gear units 507 and 508 are the same as those of the third embodiment. In the following description, elements having the same structure as those of the third embodiment are designated by the same reference numerals.

Working vehicle transmission system 621 includes traveling speed-change mechanism 622 and PTO speed-change mechanism 509. Working vehicle transmission system 621 includes main input shaft 516 connected to output shaft 513 of prime mover 502, includes reverser/PTO input shaft 517 connected to main input shaft 516 through rotary damper 514, and distributes the power of reverser/PTO input shaft 517 between traveling speed-change mechanism 622 and PTO speed-change mechanism 509. Reverser/PTO input shaft 517 is extended through charge pump 515 and reverser 503 serving as the most upstream unit of traveling speed-change mechanism 622, and is connected at the extended end thereof to PTO speed-change mechanism 509 for driving PTO shaft 512 through PTO clutch 518.

On the other hand, reverser/PTO input shaft 517 is drivingly connected to final output shaft (sub speed-change output shaft) 529 via traveling speed-change mechanism 622, and traveling speed-change mechanism 622 determines the rotary direction and speed of the prime mover power to be transmitted to final output shaft 529. Final output shaft 529 is connected to rear axles 540 via differential gear unit 507 with differential lock mechanism 541, brake devices 537 and deceleration gear trains 538 and 539, so as to transmit the differential speed-changed power of rear axles 540, which can be braked, to left and right rear wheels 511.

On the other hand, final output shaft 529 is interlockingly connected to front wheel differential input shaft 546 via drive-mode switching clutch 543, front wheel driving PTO shaft 544, propeller shaft 545, universal joints and so on. By engaging drive-mode switching clutch 53, the output power of traveling speed-change mechanism 622 (i.e., the rotary power of final output shaft 529) is transmitted to left and right front wheels 510 via differential gear unit 508 and front axles 548.

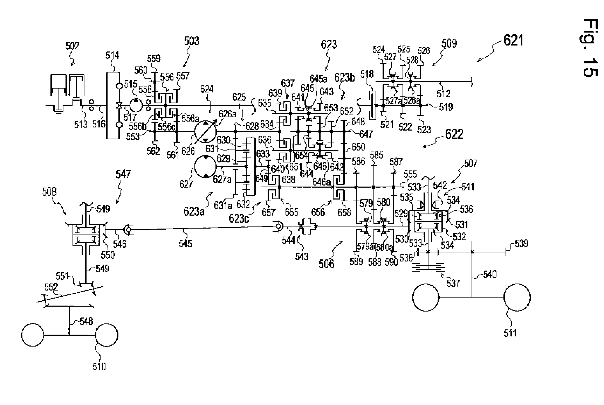

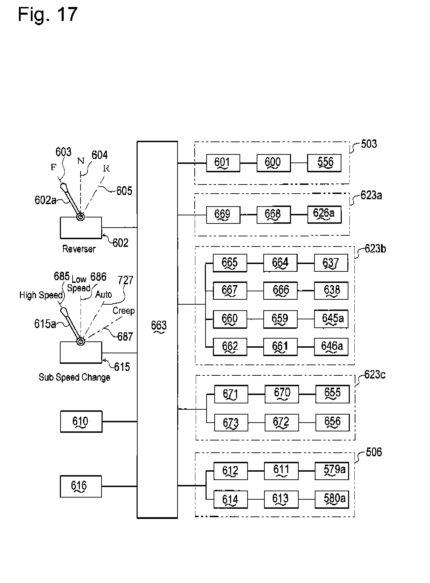

Main speed-change mechanism 623 will be described with reference to Figs. 15 and 17, Main speed-change mechanism 623 includes a hydro-mechanical stepless transmission (hereinafter, referred to as "HMT"), a gear transmission 623b serving as a multistage transmission, and a speed-change mode switching device 623c. HMT 623a has a higher power transmission efficiency than an HST. Speed-change mode switching device 623c selects whether HMT 623a or gear transmission 623b is drivingly connected to main speed-change output shaft 555. Main speed-change output shaft 555 is connected to final output shaft 529 via sub speed-change mechanism 506.

HMT 623a combines a planetary gear mechanism 625 serving as a differential unit with an HST 624 so as to change the input power without steps. Similar to HST 505a, HST 624 includes a variable displacement hydraulic pump 626 and a fixed displacement hydraulic motor 627 which are fluidly connected to each other through a hydraulic circuit. By changing the tilt angle of movable swash plate 626a of hydraulic motor 626, the amount of fluid delivered from hydraulic pump 626 to hydraulic motor 627 is changed so as to speed-change the rotary power inputted to hydraulic pump 626 without steps, and to output the speed-changed power from a motor shaft 627a of hydraulic motor 627.

Planetary gear unit 625 includes a central sun gear 629, plural planetary gears 630, and a ring-shaped internal gear 630. Planetary gears 630 are aligned along the outer periphery of sun gear 629 so as to mesh with sun gear 629, and are pivoted on a planetary carrier 631. Planetary gears 630 mesh at outer peripheries thereof with internal gear 632. Planetary gear carrier 631 is relatively rotatably fitted on motor shaft 627a. A gear 631 a is formed on an outer peripheral portion of planetary carrier 631, and meshes with a gear 628 fixed on main speed-change input shaft 553, so as to input the output power of reverser 503, i.e., the forward-traveling or backward-traveling rotary power, to planetary gears 630. On the other hand, sun gear 629 is fixed on a tip of motor shaft 627a of hydraulic motor 627, so that the rotary power of hydraulic motor 627 is inputted to sun gear 629. The power inputted to planetary gears 630 and the power inputted to sun gear 629 are combined as a stepless speed-changing power to be outputted from a stepless speed-change output shaft 633 fixed on internal gear 632.

HMT 623a having the above-mentioned structure is generally called as an output-dividing HMT which divides the input power at the output side of HST 624, so as to ensure high efficiency and high torque while the vehicle travels forward slowly. In this embodiment, the gear mechanism serving as reverser 503 similar to that of the third embodiment is disposed upstream of HMT 623a so as to mechanically switch the forward/backward traveling direction. Therefore, HMT 623a can be used only when the rotation direction is a certain direction for ensuring a great torque-up efficiency, thereby improving the power transmission efficiency for backward traveling and expanding the speed range for backward traveling. Therefore, the power transmission performance can be equalized between the forward traveling and the backward traveling.

In gear transmission 623b, a first main speed-change shaft 635, a second main speed-change shaft 636 and a multistage speed-change output shaft 647 are extended fore-and-aft of the vehicle in parallel to main speed-change input shaft 553. First and second clutches 637 and 638, which are multi-friction disc type clutches, are provided on respective first and second main speed-change shafts 635 and 636.

A first clutch input gear 639 is relatively rotatably fitted on first main speed-change shaft 635, so that, when first clutch 637 is engaged, first clutch input gear 639 is relatively unrotatably engaged to first main speed-change shaft 635 through first clutch 637. A second clutch input gear 640 is relatively rotatably fitted on second main speed-change shaft 636, so that, when second clutch 638 is engaged, second clutch input gear 640 is relatively unrotatably engaged to second main speed-change shaft 636 through second clutch 638. Similar to each of first and second clutches 504a and 504b, each of first and second clutches 637 and 638 can gradually change a torque transmitted therethrough during the switching between the engagement state and the disengagement state.

Both of first and second clutch input gears 639 and 640 constantly mesh with a distribution gear 634 fixed on main speed-change input shaft 553. Therefore, by operating for engaging/disengaging first and second clutches 637 and 638, one of first and second main speed-change shafts 635 and 636 is selected to receive the forward-traveling or backward-traveling rotary power from main speed-change input shaft 553.

On first main speed-change shaft 635 are relatively rotatably fitted a first speed driving gear 641 and a third speed driving gear 643. On second main speed-change shaft 636 are relatively rotatably fitted a second speed driving gear 642 and a fourth speed driving gear 644. On multistage speed-change output shaft 647 are provided a first speed driven gear 651, a second speed driven gear 652, a third speed driven gear 653 and a fourth speed driven gear 654. First, second, third and fourth speed driving gears 641, 642, 643 and 644 mesh with respective first, second, third and fourth speed driven gears 651, 652, 653 and 654. In this way, the plural speed gear trains for multistage speed-change consist of a first speed gear train including gears 641 and 651, a second speed gear train including gears 642 and 652, a third speed gear train including gears 643 and 653, and a fourth speed gear train including gears 644 and 654.

On first main speed-change shaft 635 are fixed a spline hub 645 between first and third speed driving gears 641 and 643, and a spline hub 646 between second and fourth speed driving gears 642 and 644. A shifter 645a is axially slidably and relatively unrotatably fitted on spline hub 645, and a shifter 646 on spline hub 646. Portions of first and third speed driving gears 641 and 643 facing spline hub 645 therebetween are formed as respective clutch-toothed portions. Portions of second and fourth speed driving gears 642 and 644 facing spline hub 646 therebetween are formed as respective clutch-toothed portions.

Therefore, by engaging shifter 645a or 646a with one of the clutch-toothed portions, the corresponding driving gear relatively unrotatably engages with either first or second main speed-change shaft 635 or 636. When gear transmission 623b is set at one of the first to fourth speed stages, the prime mover power is transmitted from reverser 503 to speed-change stepwise output shaft 647 through either first clutch 637 and first main speed-change shaft 635 or second clutch 638 and second main speed-change shaft 636,

An operation mechanism of shifters and clutches of gear transmission 623b and a control system for the shifters and clutches will be described. Similar to gear transmissions 505b and 619b of the third embodiment, shifter 645a is engaged with the clutch-toothed portion of either driving gear 641 or 643 so that one of the odd-numbered gear trains consisting of the first speed gear train including gears 641 and 651 and the third speed gear train including gears 643 and 653 is selected to be activated, and shifter 646a is engaged with the clutch-toothed portion of either driving gear 642 or 644 so that one of the even-numbered gear trains consisting of the second speed gear train including gears 642 and 652 and the fourth speed gear train including gears 644 and 654 is selected to be activated.

A hydraulic cylinder 659 serving as an actuator for sliding shifter 645a is fluidly connected to a changeover solenoid valve 660 controlled by a controller 663. A hydraulic cylinder 661 serving as an actuator for sliding shifter 646a is fluidly connected to a changeover solenoid valve 662 controlled by controller 663. Controller 663 transmits a command signal to either or both of shifters 645a and 646a so as to select one of the first to fourth speed gear trains to be activated. A hydraulic cylinder 664 serving as an actuator for operating first clutch 637 corresponding to first clutch 504a is fluidly connected to a proportional solenoid valve 665 controlled by controller 663. A hydraulic cylinder 666 serving as an actuator for operating second clutch 638 corresponding to second clutch 504b is fluidly connected to a proportional solenoid valve 667 controlled by controller 663. During gear shift, due to the signal from controller 663, the engagement action of one clutch 637 or 638 and the disengagement action of the other clutch 638 or 637 are gradually advanced so as to gradually change the torques transmitted through the respective clutches.

Speed-change mode switching device 623c is interposed between main speed-change mechanism, including HMT 623a and multistage gear transmission 623b, and sub speed-change mechanism 506. In speed-change mode switching device 623c, a multi-friction disc type stepless speed-change clutch 655 and a multi-friction disc type multistage speed-change clutch 656 are disposed fore and aft on main speed-change output shaft 555. A gear 657 is relatively rotatably fitted on main speed-change output shaft 555 adjacent to stepless speed-change clutch 655, so that, when stepless speed-change clutch 655 is engaged, gear 657 is relatively unrotatably engaged with main speed-change output shaft 555 through engaged stepless speed-change clutch 655. A gear 658 is relatively rotatably fitted on main speed-change output shaft 555 adjacent to multistage speed-change clutch 656, so that, when multistage speed-change clutch 656 is engaged, gear 658 is relatively unrotatably engaged with main speed-change output shaft 555 through engaged multistage speed-change clutch 656.

Gear 657 meshes with a gear 649 fixed on stepless speed-change output shaft 633, and gear 658 meshes with a gear 648 fixed on multistage speed-change output shaft 647 through an intermediate gear 650. When stepless speed-change clutch 655 is engaged and multistage speed-change clutch 656 is disengaged, HMT 623a serving as a continuously variable transmission is driven so as to output power to main speed-change output shaft 555. When stepless speed-change clutch 655 is disengaged and multistage speed-change clutch 656 is engaged, gear transmission 623b serving as a multistage transmission is driven so as to transmit power to main speed-change output shaft 555 through selected one of the first to fourth speed gear trains. In this way, main speed-change output shaft 555 selectively receives output power from either HMT 623a or gear transmission 623b. Similar to the third embodiment, the rotary power from main speed-change output shaft 555 is outputted to final output shaft 529 through sub speed-change mechanism 506 and to be transmitted to rear wheels 511 (and front wheels 510).

A speed-change control system with traveling speed-change mechanism 622 having the above-mentioned structure will be described with reference to Figs. 15 and 17 to 20. As shown in Figs. 15, 17 and 18, reverser lever 602a is shifted among forward traveling position 603, neutral position 604 and backward traveling position 605 so as to select one state of reverser 503 among the forward traveling state, the neutral state and the backward traveling state. With regard to sub speed-change mechanism 506, sub speed-change lever 615a is shifted among a high speed position 685 for establishing the high speed stage, a low speed position 686 for establishing the low speed stage, a creep position 687 for establishing the creep stage, and an automatic mode position for establishing a later-discussed automatic mode.

With regard to HMT 623 a of main speed-change mechanism 623, a hydraulic cylinder 668 serving as an actuator for operating a movable swash plate 626a of hydraulic pump 626 of HST 623a is fluidly connected to a proportional solenoid valve 669 controlled by a controller 663. As the vehicle speed is increased by operation such as depression of accelerator pedal 20, the tilt angle of movable swash plate 626a varies in correspondence to the vehicle speed signal from vehicle speed sensor 610 so as to increase the speed ratio (output/input speed ratio) of HST 624, thereby changing the rotary power inputted from hydraulic motor 627 to sun gear 629, and thereby changing the stepless speed-changed power as the result of combining powers in planetary gear unit 625. Therefore, while vehicle speed V increases from zero to speed-change mode switching vehicle speed V12, HMT 623a automatically speed-changes without steps so as to create a speed ratio thereof corresponding to the actual vehicle speed with a higher power transmission efficiency than that of the only HST.

In gear transmission 623b of main speed-change mechanism 623, shifters 645a and 646a are controlled by controller 663 via respective changeover solenoid valves 660 and 662 and respective hydraulic cylinders 659 and 661. When controller 663 recognizes based on the vehicle speed signal from vehicle speed sensor 610 that vehicle speed V exceeds speed-change mode switching vehicle speed V12, controller 663 selects one of the first to fourth speed stages of gear transmission 623b in correspondence to the actual vehicle speed varying between speed-change mode switching vehicle speed V12 and a vehicle speed V20. In this way, during traveling of the vehicle, main speed-change mechanism 623 automatically speed-changes. However, the difference from the third embodiment is multi-friction disc type speed-change mode switching device 623c disposed upstream of sub speed-change mechanism 506, such that, by operating clutches 655 and 656 in speed-change mode switching device 623c, the transmission or interruption of power to sub speed-change mechanism 506 is smoothened so as to enable the sub speed-change operation (i.e., operation of sub speed-change lever 615a) during traveling of the vehicle.

With regard to speed-change mode switching device 623c of main speed-change mechanism 623, a hydraulic cylinder 670 serving as an actuator for operating stepless speed-change clutch 655 is fluidly connected to a proportional solenoid valve 671 controlled by controller 663, and a hydraulic cylinder 672 serving as an actuator for operating multistage speed-change clutch 656 is fluidly connected to a proportional solenoid valve 673 controlled by controller 663. Due to a signal from controller 663, one of hydraulic cylinders 670 and 672 is engaged, and the other of hydraulic cylinders 670 and 672 is disengaged, so as to select either the stepless speed-changed power from HMT 623a or the stepwise speed-changed power from multistage gear transmission 623b, thereby selectively establishing either the stepless speed-change mode or the multistage speed-change mode.

When vehicle speed V is not more than speed-change mode switching vehicle speed V12, main speed-change mechanism 623 is set in the stepless speed-change mode. Thus, on the precondition that reverser lever 602a is set at either forward traveling position 604 or backward traveling position 605 and sub speed-change leer 615 a is set at low speed position 686, when the vehicle starts (by depressing accelerator pedal 20, for example), stepless speed-change clutch 655 is engaged and multistage speed-change clutch 656 is disengaged, so that the output power of HMT 623a is transmitted to main speed-change output shaft 555 via stepless speed-change output shaft 633, gears 649 and 657 and stepless speed-change clutch 655, thereby being automatically speed-changed without steps. During traveling of the vehicle set in the stepless speed-change mode, when sub speed-change lever 615a is shifted to the high speed position, stepless speed-change clutch 655 is gradually disengaged so that shifter 579a is disengaged from the clutch-toothed portion of low speed gear 589 while shifter 580a is engaged with the clutch-toothed portion of high speed gear 588. Finally, the disengagement of shifter 579a and the engagement of shifter 580a are completed, and then, stepless speed-change clutch 655 is gradually engaged, thereby completing the speed-change from the low sped stage to the high speed stage without excessive load on the transmission system. On the contrary, the speed-change of sub speed-change mechanism 506 from the high speed stage to the low speed stage is performed similar to the switching of stepless speed-change clutch 655.

When vehicle speed V further increases and exceeds speed-change mode switching vehicle speed V12, stepless speed-change clutch 655 is disengaged, and multistage speed-change clutch 656 is engaged, so that the stepwise speed-changed power from gear transmission 623b is transmitted from multistage speed-change output shaft 647 to main speed-change output shaft 555 via gears 648, 650 and 658 and multistage speed-change clutch 656, thereby switching main speed-change mechanism 623 into the multistage speed-change mode.

With regard to relations of the set mode of main speed-change mechanism 623 and the set speed stage of sub speed-change mechanism 506 to vehicle speed V, as shown in Fig. 18, the low speed stage of sub speed-change mechanism 506 set while setting main speed-change mechanism 623 in the stepless speed-change mode corresponds to vehicle speed V between zero (the state where the vehicle is stationary) and vehicle speed V11. The high speed stage of sub speed-change mechanism 506 set while setting main speed-change mechanism 623 in the stepless speed-change mode corresponds to variation of vehicle speed V between vehicle speeds V11 and V12. The low speed stage of sub speed-change mechanism 506 set while setting main speed-change mechanism 623 in the multistage speed-change mode corresponds to variation of vehicle speed V between vehicle speeds V13 and V16. The high speed stage of sub speed-change mechanism 506 set while setting main speed-change mechanism 623 in the multistage speed-change mode corresponds to variation of vehicle speed V between vehicle speeds V17 and V20.

Regarding the variation of vehicle speed V between vehicle speeds V13 and V20, more specifically, the low speed stage of sub speed-change mechanism 506 set while setting main speed-change mechanism 623 in the multistage speed-change mode and in the first speed stage (i.e., the first low speed stage of traveling speed-change mechanism 622) corresponds to vehicle speed V13. The low speed stage of sub speed-change mechanism 506 set while setting main speed-change mechanism 623 in the multistage speed-change mode and in the second speed stage (i.e., the second low speed stage of traveling speed-change mechanism 622) corresponds to vehicle speed V14. The low speed stage of sub speed-change mechanism 506 set while setting main speed-change mechanism 623 in the multistage speed-change mode and in the third speed stage (i.e., the third low speed stage of traveling speed-change mechanism 622) corresponds to vehicle speed V15. The low speed stage of sub speed-change mechanism 506 set while setting main speed-change mechanism 623 in the multistage speed-change mode and in the fourth speed stage (i.e., the fourth low speed stage of traveling speed-change mechanism 622) corresponds to vehicle speed V16. The high speed stage of sub speed-change mechanism 506 set while setting main speed-change mechanism 623 in the multistage speed-change mode and in the first speed stage (i.e., the first high speed stage of traveling speed-change mechanism 622) corresponds to vehicle speed V17. The high speed stage of sub speed-change mechanism 506 set while setting main speed-change mechanism 623 in the multistage speed-change mode and in the second speed stage (i.e., the second high speed stage of traveling speed-change mechanism 622) corresponds to vehicle speed V18. The high speed stage of sub speed-change mechanism 506 set while setting main speed-change mechanism 623 in the multistage speed-change mode and in the third speed stage (i.e., the third high speed stage of traveling speed-change mechanism 622) corresponds to vehicle speed V19. The high speed stage of sub speed-change mechanism 506 set while setting main speed-change mechanism 623 in the multistage speed-change mode and in the fourth speed stage (i.e., the fourth high speed stage of traveling speed-change mechanism 622) corresponds to vehicle speed V20.

With regard to main speed-change mechanism 623, as mentioned above, controller 663 automatically controls hydraulic cylinders 668, 664, 666, 659, 661, 670 and 672 so as to automatically determine whether main speed-change mechanism 623 is set in the stepless speed-change mode or the multistage speed-change mode, and to automatically select one of the first to fourth speed stages of main speed-change mechanism 623 set in the multistage speed-change mode. On the other hand, with regard to the selection of the speed stage of sub speed-change mechanism 506, during traveling of the vehicle, unless sub speed-change lever 615a is set at automatic mode position 727, an operator judges which of vehicle speeds V11, V12, V13, V16 and V17 is reached by actual vehicle speed V, and manually shifts sub speed-change lever 615a between high speed position 685 and low speed position 686 based on the judgment, thereby optimizing the traveling performance of the vehicle.

Controller 663 stores the speed setting pattern of main and sub speed-change mechanisms 623 and 506 corresponding to vehicle speed V as a memorized map. It is assumed that sub speed-change lever 615a is set at automatic mode position 727 so as to set traveling speed-change mechanism 622 in the automatic mode. When main speed-change mechanism 623 is set in the stepless speed-change mode, sub speed-change mechanism 506 is automatically switched between the low speed stage and the high speed stage depending on whether vehicle speed V reaches vehicle speed V11 or not. When main speed-change mechanism 623 is set in the multistage speed-change mode, sub speed-change mechanism 506 is automatically switched between the low speed stage and the high speed stage depending on whether vehicle speed V reaches vehicle speed V16 or not. Accordingly, due to the setting of traveling speed-change mechanism 622 in the automatic speed-change mode, the above-mentioned manipulation of sub speed-change lever 615a during traveling of the vehicle is unnecessary, thereby further improving the operability and stability in traveling of the vehicle. Incidentally, in this embodiment, similar to the third embodiment, the vehicle speed range for setting the creep stage of sub speed-change mechanism 506 is defined as a creep stage setting vehicle speed range 675 within a stepless speed-change mode range 674 so as to greatly smoothen the creep (very slow traveling) of the vehicle.

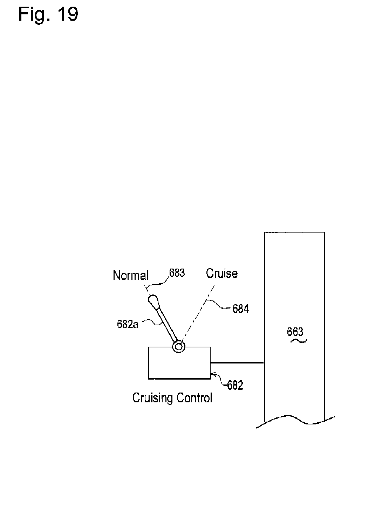

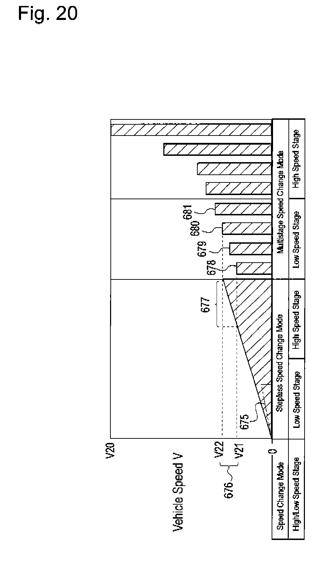

As shown in Figs. 19 and 20, the speed-change control system may be configured so that the speed range for setting the stepless speed-change mode and the speed range for setting the multistage speed-change mode partly overlap so as to have a speed range (hereinafter referred to as "overlap speed range") 676 between vehicle speeds V21 and V22. In this embodiment, the speed-change control system is configured so that a speed range 677 for setting a high speed within the speed range of the stepless speed-change mode is exchangeable for some low speed stages of the multistage speed-change mode, i.e., a first low speed stage 678, a second low speed stage 679 and a third low speed stage 680.

Further, as shown in Fig. 19, a switch 682 is connected to controller 663 so as to select which speed-change mode corresponds to overlap speed range 676. Switch 682 is provided with a mode switching lever 682a which is shiftable between a normal mode position 683 and a cruising control mode position 684.

On the assumption that the normal mode is selected, the speed-change is performed in the stepless speed-change mode while the vehicle speed increases from zero to a speed-change mode switching vehicle speed V22. When the vehicle speed further increases and exceeds speed-change mode switching vehicle speed V22, first low speed range 678, second low speed range 679 and third low speed range 680 are skipped over so that the multistage speed-change mode starts by suddenly setting a fourth low speed stage 681. Afterward, the speed-change is performed in the multistage speed-change mode while the vehicle speed varies between vehicle speed V21 and vehicle speed V20. When the vehicle speed is reduced and becomes less than vehicle speed V21, the stepless speed-change mode is established again. In this way, when the normal mode is set, once the speed-change mode is switched, the speed-change corresponding to overlap speed range 676 is performed in the speed-change mode set after the switching of the speed-change mode. In other word, either of the speed-change modes can be selected in correspondence to overlap speed range 676.

On the assumption that the cruising control mode is selected, when the vehicle speed controlled in the stepless speed-change mode increases into a speed range 677, the multistage speed-change mode starts for traveling of the vehicle by setting any of first low speed stage 678, second low speed stage 679 and third low speed stage 680. In other words, when the cruising control mode is established and the increased vehicle speed becomes a speed within overlap speed range 676, the speed-change by the multistage transmission is automatically selected so as to ensure high power transmission efficiency suitable for the cruising (constant speed traveling) of the vehicle.

Further, when the cruising control mode is selected, when controller 663 recognizes based on a signal from load torque sensor 616 connected to controller 663 that variation of load on prime mover 502 exceeds a predetermined value, stepless speed-change clutch 655 is engaged and multistage speed-change clutch 656 is disengaged so as to automatically switch the speed-change mode from any of first low speed stage 678, second low speed stage 679 and third low speed stage 680 of the multistage speed-change mode to the stepless speed-change mode corresponding to speed range 677. Therefore, the stepless speed-change mode is automatically set to finely correspond to the variation of load on prime mover 502.

In this way, the speed ranges of the respective stepless speed-change mode and multistage speed-change mode have overlap speed range 676. When the vehicle speed is within overlap speed range 676, either the stepless speed-change mode or the multistage speed-change mode can be selected so that the vehicle can travel in the selected optimal speed-change mode in correspondence to work contents or conditions of load on the prime mover, thereby improving efficiencies in work, power transmission and fuel consumption.

Further, in the above-mentioned speed-change control system, the high speed range of the stepless speed-change mode and the low speed range of the multistage speed-change mode overlap each other so as to have overlap speed range 676. When the cruising control mode for traveling at a constant speed is selected and the vehicle speed controlled in the stepless speed-change mode becomes a value in high speed range 677, the speed-change mode is automatically switched to first low speed stage 678, second low speed stage 679 and third low speed stage 680 within the low speed range controlled in the multistage speed-change mode. Therefore, the cruising of the vehicle can depend on the mechanical power transmission in the multistage speed-change mode that is advantageous in power transmission efficiency and fuel efficiency in comparison with the hydraulic power transmission in the stepless speed-change mode.

Additionally, in the speed-change control system, when variation of load on prime mover 502 increases to become not less than a predetermined value, the speed-change by any of first, second or third low speed stage 678, 679 or 680 within the low speed stage range of the multistage speed-change mode is automatically returned to the speed-change in high speed range 677 by the stepless speed-change mode. In this regard, when load on prime mover 502 varies in a large scale during traveling in the multistage speed-change mode, the efficiencies in power transmission and fuel consumption are reduced because the multistage speed-change mode depending on the mechanical power transmission cannot ensure fine speed-change corresponding to the load variation. Therefore, the stepless speed-change mode depending on the hydraulic power transmission is reset so as to accurately determine a vehicle speed corresponding to the condition of load on prime mover 502, thereby ensuring sufficient efficiencies in power transmission and fuel consumption.

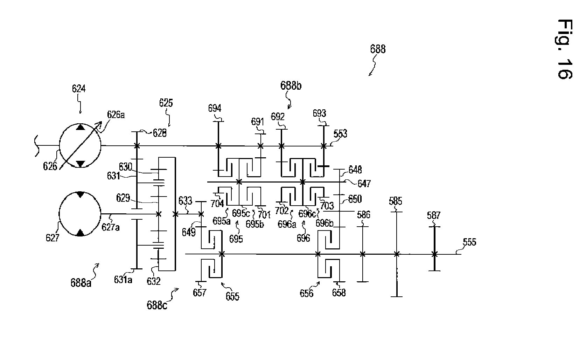

Another working vehicle transmission system 621 according to the fourth embodiment will be described with reference to Fig. 16. In this case, a main speed-change mechanism 688 of working vehicle transmission system 621 includes an HMT 688 and a speed-change mode switching device 688c, which are identical to HMT 623a and speed-change mode switching device 623c shown in Fig. 15, respectively. Main speed-change mechanism 688 includes a gear transmission 688b, which differs from gear transmission 623b shown in Fig. 15. The speed-change process of gear transmission 688b is performed not by combination of selection of the shifters for the odd-numbered and even-numbered gear trains and switching of the clutches, but only by the switching of a clutch, such as a multi-friction disc type clutch, which can gradually change a torque transmitted therethrough.

In detail, a first clutch unit 695 and a second clutch unit 696 are disposed fore and aft on multistage speed-change output shaft 647. Front and rear chambers are formed in a common clutch casing (drum) 685c of first clutch unit 695, and a fourth speed clutch 695a and a first speed clutch 695b are disposed in the respective front and rear chambers of clutch casing 685c. A fourth speed driven gear 704 is relatively rotatably provided on multistage speed-change output shaft 647 adjacent to fourth speed clutch 695a, so that, when fourth speed clutch 695a is engaged, fourth speed driven gear 704 is relatively unrotatably engaged with multistage speed-change output shaft 647 through engaged fourth speed clutch 695a. A first speed driven gear 701 is relatively rotatably provided on multistage speed-change output shaft 647 adjacent to first speed clutch 695b, so that, when first speed clutch 695b is engaged, first speed driven gear 701 is relatively unrotatably engaged with multistage speed-change output shaft 647 through engaged first speed clutch 695b.

Also, front and rear chambers are formed in a common clutch casing (drum) 686c of second clutch unit 696, and a second speed clutch 696a and a third speed clutch 696b are disposed in the respective front and rear chambers of clutch casing 686c. A second speed driven gear 702 is relatively rotatably provided on multistage speed-change output shaft 647 adjacent to second speed clutch 696a, so that, when fourth speed clutch 695a is engaged, fourth speed driven gear 704 is relatively unrotatably engaged with multistage speed-change output shaft 647 through engaged fourth speed clutch 695a. A first speed driven gear 701 is relatively rotatably provided on multistage speed-change output shaft 647 adjacent to first speed clutch 695b, so that, when first speed clutch 695b is engaged, first speed driven gear 701 is relatively unrotatably engaged with multistage speed-change output shaft 647 through engaged first speed clutch 695b,

A fourth speed driving gear 694, a first speed driving gear 691, a second speed driving gear 693 and a third speed driving gear 693 are fixed on main speed-change input shaft 553, and mesh with respective driven gears 704, 701, 702 and 703. In this way, plural main speed-change drive trains consist of a first speed gear train including gears 691 and 701, a second speed gear train including gears 692 and 702, a third speed gear train including gears 693 and 703, and a fourth speed gear train including gears 694 and 704. Due to this structure, by engaging/disengaging clutches 695a, 695b, 696a and 696b, the power from main speed-change input shaft 553 is transmitted to multistage sped change output shaft 647 through one of the first to fourth speed gear trains. Clutches 685a, 695b, 696a and 696b are gradually operated by an actuator or actuators (not shown) so as to gradually change torques transmitted therethrough.

There is no complicated structure including spline hubs and clutch-toothed portions, such as to be required for operating shifters for selecting one of the odd-numbered and even-numbered speed gear trains. Further, in the speed-change structure, similar mechanisms are concentrically provided on the common shaft so as to reduce the number of shafts required for speed-change. In this regard, gear transmission 688b serving as the multistage transmission includes multi-friction disc type first and second clutches 695 and 696, which gradually change torques transmitted therethrough so as to gradually change the clutch states between the engagement stage and the disengagement state, thereby simplifying the speed-change mechanism, reducing shafts required for the speed-change, reducing costs, simplifying maintenance, and minimizing the transmission system. In this case, description of the structures other than gear transmission 688b is omitted because they are the same as those of working vehicle transmission system 621 of the fourth embodiment shown in Fig. 15.

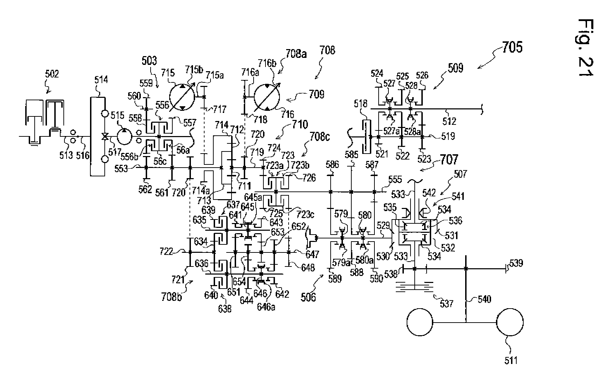

A working vehicle transmission system 705 according to a fifth embodiment will be described with reference to Fig. 21. The only difference between working vehicle transmission system 705 and working vehicle transmission system 621 of the fourth embodiment is a main speed-change mechanism 708 in a traveling speed-change mechanism 707, which is different from main speed-change mechanism 623 of traveling speed-change mechanism 622 of working vehicle transmission system 621. The remaining elements, such as prime mover 502, rotary damper 514, reverser 503, PTO speed-change device 509, sub speed-change mechanism 506 and front and rear differential gear units 507, are the same as those of working vehicle transmission system 621 according to the fourth embodiment.

Main speed-change mechanism 708 includes an HMT 708a serving as a continuously variable transmission, a gear transmission 708b serving as a multistage transmission, and a speed-change mode switching device 708c. HMT 708a and speed-change mode switching device 708c have different structures from the HMT and speed-change mode switching device of the fourth embodiment. In this regard, while HMT 623a of the fourth embodiment is an output-dividing HMT, HMT 708a is an input-dividing HMT which divides the input power on the input side of HST 709 so as to achieve high efficiency and high torque when the vehicle travels fast.

HMT 708a includes a planetary gear unit 710 and HST 709. HST 709 includes a hydraulic pump 715 and a hydraulic motor 716 which are fluidly connected to each other through a hydraulic circuit. However, the difference from the third and fourth embodiments is that both of hydraulic pump 715 and motor 716 are variable in displacement, and are provided with respective movable swash plates 715b and 716b whose tilt angles are changed to change the amount of delivery fluid from hydraulic pump 215 to hydraulic motor 716, thereby speed-changing the rotary power inputted hydraulic pump 715 to be outputted to motor shaft 716a without steps.

In planetary gear unit 710, a planetary carrier 713 is fixed on a rear end of main speed-change input shaft 553 and supports plural planetary gears 712. Planetary gears 712 are interposed between a sun gear 711 and an internal gear 714 disposed around sun gear 711 so as to mesh with sun gear 711 and internal gear 714. Internal gear 714 includes a boss portion relatively rotatably fitted on main speed-change input shaft 553. A gear 714a is formed on the boss portion, and meshes with a gear 717 fixed on a pump shaft 715a of hydraulic pump 715. Sun gear 711 is provided on a tip of a stepless speed-change output shaft 719, and a gear 720 is fixed on stepless speed-change output shaft 719. Gear 720 meshes with a gear 718 fixed on motor shaft 716a.

In this structure, the forward-traveling rotary power or backward-traveling rotary power from reverser 503 is transmitted to planetary gear unit 710 through main speed-change input shaft 553. In planetary gear unit 710, the power is transmitted from planetary carrier 713 to sun gear 711 through planetary gears 712. Meanwhile, the power is also transmitted from planetary gears 712 to the gear train including gears 714a and 717 through internal gear 714. The power outputted from hydraulic motor 716 of HST 709 through the hydraulic circuit is transmitted to gear 720 meshing with gear 718, and is combined in stepless speed-change output shaft 719 with the power transmitted to sun gear 711, thereby being outputted as the stepless speed-changed power.

Incidentally, due to various patterns of combination of the input shaft (main speed-change input shaft 553) and the HST (624 or 709) with component elements of the planetary gear unit (sun gear 629 or 711, planetary gears 630 or 712, internal gear 632 or 714), various types ofHMTs can be constructed. Thus, the HMT is not limited by the types of HMT disclosed as the fourth and fifth embodiments.

Gear 720 fixed on main speed-change input shaft 553 meshes with a gear 721 fixed on an input shaft 722 to gear transmission 708b. Therefore, the forward-traveling rotary power or backward-traveling rotary power from reverser 503 is also inputted to gear transmission 708b through main speed-change input shaft 553, is speed-changed at any of the speed stages, and then is outputted as the stepwise speed-changed power to multistage speed-change output shaft 647, in the same way as that of the fourth embodiment.

Either the stepless speed-changed power or the stepwise speed-changed power, which are outputted as mentioned above, is selected by speed-change mode switching device 708c. Speed-change mode switching device 708c includes a speed-change mode switching clutch 723, a stepless speed-changed power input gear 725 and a stepwise speed-changed power input gear 726. Stepless speed-changed power input gear 725 is relatively rotatably provided on main speed-change output shaft 555, and meshes with a gear 724 on stepless speed-change output shaft 719. Stepwise speed-changed power input gear 726 is relatively rotatably provided on main speed-change output shaft 555, and meshes with gear 648 on multistage speed-change output shaft 647. Speed-change mode switching clutch 723 includes a common clutch casing (drum) 723c formed therein with front and rear chambers, and includes a stepless speed-change clutch 723a and a multistage speed-change clutch 723b, which are disposed in the respective front and rear chambers of clutch casing 723c. When stepless speed-change clutch 723a is engaged, stepless speed-changed power input gear 725 is relatively unrotatably engaged with main speed-change output shaft 555 through engaged stepless speed-change clutch 723a. When multistage speed-change clutch 723b is engaged, stepwise speed-changed power input gear 726 is relatively unrotatably engaged with main speed-change output shaft 555 through engaged multistage speed-change clutch 723b.

Therefore, by engaging/disengaging stepless speed-change clutch 723a and multistage speed-change clutch 723b, either transmission 708a or 708b is selected to transmit its output power to main speed-change output shaft 555. The output power of main speed-change output shaft 555 is speed-changed by sub speed-change mechanism 506 and is transmitted to rear wheels 511 (and front wheels 510), in the same way as that according to the third and fourth embodiments.

In speed-change mechanism 707 having such a construction, similar to the fourth embodiment, the stepless speed-change mode for speed-changing the vehicle speed without steps is automatically selected when the vehicle starts and before the increased vehicle speed reaches a certain speed. Then, by further increase of the vehicle speed, the speed-change mode is switched to the multistage speed-change mode for automatically speed-changing the vehicle speed at an optimal speed stage. Thus, the vehicle is optimized in operability and stability during traveling for work in the low and middle vehicle speed ranges. On the other hand, the vehicle is optimized in efficiencies of power transmission and fuel consumption during traveling for movement from a working field to a storehouse in the middle and high speed ranges.

Further, in the present embodiment, the overlap speed range referred to in the fourth embodiment may be defined, so that either the stepless speed-change mode or the multistage speed-change mode can be selected in correspondence to the same vehicle speed. Therefore, the vehicle can travel in better speed-change mode corresponding to work contents or condition of load on prime mover 502, thereby further improving efficiencies in workability, power transmission and fuel consumption.

With regard to each of the above-mentioned speed-change mechanisms, an alternative continuously variable transmission may be provided, instead of HST 505a or 619a of the third embodiment and HMT 623a, 688a or 708a of the fourth or fifth embodiment. For example, the alternative continuously variable transmission is an electro-mechanical stepless transmission, i.e., EMT, as combination of a generator and an electric motor, which converts a part of mechanical power into electric power to be transmitted. If this transmission is adapted to the above-mentioned third, fourth and fifth embodiments, the generator replaces the hydraulic pump, and the electric motor replaces the hydraulic motor. While the hydraulic pump and motor are advantageous in efficiency for starting and durability, the generator and electric motor can ensure high speed and complicated speed changing by improving an electronic circuit.

Alternatively, a mechanical stepless transmission, such as a metal belt type CVT or a toroidal CVT, may serve as the continuously variable transmission. The metal belt type CVT includes input and output pulleys having variable diameters and a metal belt looped between the input and output pulleys. The toroidal CVT includes a pair of discs connected to respective input and output shafts and a top-shaped power roller interposed between the discs. Both of the mechanical stepless transmissions ensure smooth and silent power transmission and ensures higher power transmission efficiency than that of a hydraulic stepless transmission, thereby further improving the fuel efficiency, operability and stability in traveling. The mechanical stepless transmission is preferably used with the torque converter. When the metal belt type CVT is adapted to any of the above-mentioned third, fourth and fifth embodiments, the input pulley replaces the hydraulic pump, and the output pulley replaces the hydraulic motor. When the toroidal CVT is adapted to any of the third, fourth and fifth embodiments, the input side disc replaces the hydraulic pump, and the output side disc replaces the hydraulic motor.

Among the above-mentioned gear transmissions serving as the multistage transmissions, only the second type gear transmission according to the fourth embodiment uses only the multi-friction disc clutches for speed-change. Each of the other gear transmissions uses the collar-shaped non-synchromesh shifter/shifters for speed-change in cooperation with the multi-friction disc clutch/clutches. Alternatively, these gear transmissions may use synchromesh speed-change elements. The above-mentioned embodiments are not limitative about this matter, and only requirement is sure speed-change for setting a target speed stage (even during traveling).

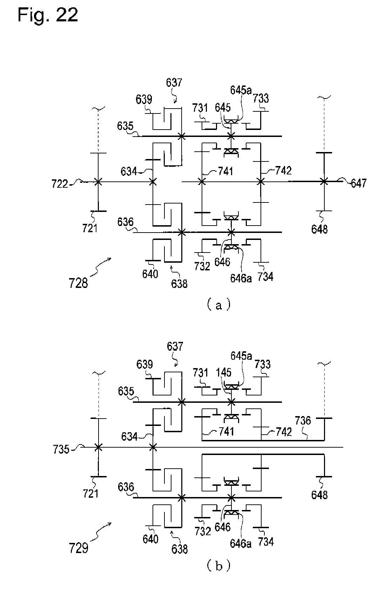

Another working vehicle transmission system 705 according to the fifth embodiment will be described with reference to Fig. 22. Referring to Fig. 22(a), a gear transmission 728 serving as the multistage transmission is configured so as to reduce the number of driven gears on multistage speed-change output shaft 647 of gear transmission 798b. In this regard, a single first driven gear 741 serves as combination of first and second speed driven gears 651 and 652, and a single second driven gear 742 serves as combination ofthird and fourth speed driven gears 653 and 654.

First driven gear 741 meshes with both of first speed driving gear 731 on first traveling speed-change shaft 635 and second speed driving gear 732 on second traveling speed-change shaft 636. Second driven gear 742 meshes with both of third speed driving gear 733 on first traveling speed-change shaft 635 and fourth speed driving gear 734 on second traveling speed-change shaft 636. Gears 731 and 741 constitute a first speed gear train. Gears 732 and 741 constitute a second speed gear train. Gears 733 and 742 constitute a third speed gear train. Gears 734 and 742 constitute a fourth speed gear train. Spline hub 645 is fixed on first traveling speed-change shaft 635 between first and third speed driving gears 731 and 733, and spline hub 646 is fixed on second traveling speed-change shaft 636 between second and fourth speed driving gears 732 and 734. Shifter 645a is axially slidably and relatively unrotatably fitted on spline hub 645, and shifter 646a on spline hub 646.

Therefore, similar to the original fifth embodiment, by engaging shifter 645a or 646a with the clutcli-toothed portion of any of the driving gears, the corresponding driving gear is relatively unrotatably engaged with either traveling speed-change shaft 635 or 636 so that the prime mover power from reverser 503 is speed-changed by either first clutch 637 and first traveling speed-change shaft 635 or second clutch 638 and second traveling speed-change shaft 636 and outputted from multistage speed-change output shaft 636 as the steply speed-changed power. The difference from the original fifth embodiment is that only two driven gears 741 and 742 on multistage speed-change output shaft 647 create four speed stages.

Therefore, in gear transmission 728 serving as the multistage transmission, common transmission members such as first driven gear 741 are shared between the even-numbered speed drive trains such as the second speed gear train (gears 732 and 741) and the odd-numbered speed drive trains such as the first speed gear train (gears 731 and 741), thereby reducing the number of parts, and thereby reducing costs, simplifying maintenance, and minimizing the transmission system.

Referring to Fig. 22(b), a gear transmission 729 serving as the multistage transmission is configured so as to simplify bearing portions for supporting driven gears 741 and 742 of gear transmission 728. In this regard, an input shaft 735 serves as further (rearward) extended input shaft 722, and driven gears 741 and 742 are supported on the extended portion of input shaft 735. More specifically, a cylindrical multistage speed-change output shaft 736 is fore-and-aft formed on the outer peripheral portion thereof with driven gears 741 and 742 and gears 648, and is relatively rotatably fitted on the extended portion of input shaft 735, so as to receive power from any of the speed-change drive trains.

Since multistage speed-change output shaft 736 serving as the output shaft of gear transmission 729 serving as the multistage transmission is relatively rotatably provided on input shaft 735 of gear transmission 729, no additional member or no additional space is required for supporting multistage speed-change output shaft 736, thereby further reducing costs, simplifying maintenance and minimizing the transmission system.

It is further understood by those skilled in the art that the foregoing description is a preferred embodiment of the disclosed device and that various changes and modifications may be made in the invention without departing from the scope thereof defined by the following claims.

## Claims

1. A working vehicle transmission system comprising:
a PTO device for driving an external working device by power of a prime mover; and
a multistage transmission for transmitting power from the prime mover to an axle,
wherein the multistage transmission includes a main speed-change mechanism and a sub speed-change mechanism,
wherein the main speed-change mechanism has plural drive trains for setting respective different speed stages,
wherein the sub speed-change mechanism is disposed downstream of the main speed-change mechanism and has plural drive trains for setting respective different speed stages,
wherein the main speed-change mechanism includes a first clutch and a second clutch,
wherein, the main speed-change mechanism drive trains used for setting odd-numbered speed stages are activated by engaging the first clutch, and the main speed-change mechanism drive trains used for setting even-numbered speed stages are activated by engaging the second clutch. ,
wherein, during a speed-change operation of the main speed-change mechanism, an engagement action of one of the first and second clutches and a disengagement action of the other of the first and second clutches overlap each other,
**characterized by** a reverser disposed upstream of the first and second clutches of the main speed-change mechanism so as to enable switching the direction of output rotation transmitted to the first and second clutches from one direction to the opposite direction.

2. The working vehicle transmission system according to claim 1, wherein a torque converter is interposed between the prime mover and the reverser.

3. The working vehicle transmission system according to claim 2, wherein the torque converter can be locked up, depending on the set speed stage of the sub speed-change mechanism.

4. The working vehicle transmission system according to claim 2, wherein the torque converter can be locked up, and wherein, when the torque converter is locked up and a working vehicle starts, one of the drive trains of the main speed-change mechanism for setting a low speed stage is set to be activated.

5. The working vehicle transmission system according to claim 2, wherein the PTO device is drivingly connected to the prime mover without the torque converter therethrough.

6. The working vehicle transmission system according to claim 2, wherein the PTO device is drivingly connected to the prime mover through the torque converter.

7. The working vehicle transmission system according to claim 1, wherein a continuously variable transmission is disposed upstream of the sub speed-change mechanism of the multistage transmission and is drivingly connected to the sub speed-change mechanism in parallel to the main speed-change mechanism of the multistage transmission, wherein either a multistage speed-change mode or a stepless speed-change mode for driving the axle is selected, wherein the multistage speed-change mode is selected for outputting a rotary power speed-changed stepwise by the main speed-change mechanism to the sub speed-change mechanism, and wherein the stepless speed-change mode is selected for outputting a rotary power speed-changed without steps by the continuously variable transmission to the sub speed-change mechanism.

8. The working vehicle transmission system according to claim 7, wherein the working vehicle transmission system is set in a load control mode for speed-changing a traveling speed of a working vehicle in correspondence to a load on the prime mover regardless of whether the multistage speed-change mode or the stepless speed-change mode is selected.

9. The working vehicle transmission system according to claim 7, wherein a traveling speed range of a working vehicle corresponding to the multistage speed-change mode and a traveling speed range of the working vehicle corresponding to the stepless speed-change mode overlap each other so as to have an overlap speed range.

10. The working vehicle transmission system according to claim 7, wherein the continuously variable transmission is drivingly connected to a certain drive train of the plural drive trains of the main speed-change mechanism for setting respective speed stages, and wherein the stepless speed-change mode is selected by selecting the certain drive train of the main speed-change mechanism to be activated.

11. The working vehicle transmission system according to claim 10, wherein the certain drive train is a drive train for setting the lowest speed stage of the main speed-change mechanism.

12. The working vehicle transmission system according to claim 7, wherein a stepless speed-change clutch is provided to drivingly connect the continuously variable transmission to an input shaft of the sub speed-change mechanism, wherein a multistage speed-change clutch is provided to drivingly connect the main speed-change mechanism to the input shaft of the sub speed-change mechanism, and wherein the stepless speed-change clutch and the multistage speed-change clutch are controlled so that an engagement action of one of the stepless and multistage speed-change clutches and a disengagement action of the other of the stepless and multistage speed-change clutches overlap each other.
